(19)

Europäisches
Patentamt

European
Patent Office

Office européen
des brevets

(11) **EP 4 593 499 A1**

(12) **EUROPEAN PATENT APPLICATION**
published in accordance with Art. 153(4) EPC

(43) Date of publication:
**30.07.2025 Bulletin 2025/31**

(21) Application number: 23870874.7

(22) Date of filing: **26.09.2023**

(51) International Patent Classification (IPC):
***H04W 72/21*** (2023.01)   ***H04W 72/0453*** (2023.01)
***H04W 72/1268*** (2023.01)

(52) Cooperative Patent Classification (CPC):
**H04W 72/0453; H04W 72/1268; H04W 72/21;**
**H04W 72/231; H04W 72/232**

(86) International application number:
**PCT/CN2023/121789**

(87) International publication number:
**WO 2024/067647 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022   CN 202211214283**

(71) Applicant: **Huawei Technologies Co., Ltd.
Shenzhen, Guangdong 518129 (CN)**

(72) Inventors:
• **LU, Shaozhong
  Shenzhen, Guangdong 518129 (CN)**
• **GUO, Zhiheng
  Shenzhen, Guangdong 518129 (CN)**
• **SONG, Xinghua
  Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **UPLINK TRANSMISSION METHOD AND COMMUNICATION APPARATUS**

(57)    This application provides an uplink transmission method and a communication apparatus, applied to a communication system, to improve resource utilization. The method includes: A terminal device receives first indication information indicating a first frequency unit set and a second frequency unit set. The terminal device sends a first signal on a third frequency unit set corresponding to a first time unit when a type of the first time unit used for sending the first signal is an uplink time unit. The terminal device sends the first signal on a fourth frequency unit set corresponding to the first time unit when the type of the first time unit is a duplex time unit. The third frequency unit set is determined based on the first frequency unit set, the fourth frequency unit set is determined based on the second frequency unit set, and a frequency range of the fourth frequency unit set is within a frequency range of an uplink subband of the first time unit.

FIG. 5

## Description

This application claims priority to Chinese Patent Application No. 202211214283.0, filed with the China National Intellectual Property Administration on September 30, 2022 and entitled "UPLINK TRANSMISSION METHOD AND COMMUNICATION APPARATUS", which is incorporated herein by reference in its entirety.

## TECHNICAL FIELD

This application relates to the communication field, and in particular, to an uplink transmission method and a communication apparatus.

## BACKGROUND

A network device may configure a physical uplink shared channel (physical uplink shared channel, PUSCH) for a terminal device. A time domain position of a configured grant PUSCH may be indicated by a start position of the PUSCH and a configured grant periodicity, and a frequency domain position of the configured grant PUSCH may be indicated by a frequency unit set. In a subband full duplex scenario, the time domain position of the PUSCH configured by the network device for the terminal device may be in a duplex time unit. If a frequency range of at least a part of frequency resources of the PUSCH in a duplex time unit used for sending the PUSCH is outside a frequency range of an uplink subband in the duplex time unit, the terminal device discards a signal sent in the duplex time unit. Consequently, an uplink resource in the duplex time unit cannot be fully utilized.

## SUMMARY

Embodiments of this application provide an uplink transmission method and a communication apparatus, to improve resource utilization.

To achieve the foregoing objective, the following technical solutions are used in this application.

According to a first aspect, an uplink transmission method is provided. The uplink transmission method includes: A terminal device receives first indication information from a network device. The first indication information indicates a first frequency unit set and a second frequency unit set. The terminal device sends a first signal on a third frequency unit set corresponding to a first time unit if a type of the first time unit is an uplink time unit. The third frequency unit set is a frequency unit set determined based on the first frequency unit set. The terminal device sends the first signal on a fourth frequency unit set corresponding to the first time unit if the type of the first time unit is a duplex time unit. The fourth frequency unit set is a frequency unit set determined based on the second frequency unit set, and a frequency range of the fourth frequency unit set is within a frequency range of an uplink subband of the first time unit. The first time unit is a time unit used for sending the first signal, and one frequency unit set includes one or more frequency units.

Based on the uplink transmission method provided in the first aspect, the terminal device may receive the first indication information; and when the first time unit is the uplink time unit, the terminal device sends the first signal based on the third frequency unit set determined based on the first frequency unit set indicated by the first indication information; or when the first time unit is the duplex time unit, the terminal device sends the first signal based on the fourth frequency unit set determined based on the second frequency unit set indicated by the first indication information. The frequency range of the fourth frequency unit is within the frequency range of the uplink subband of the first time unit. The first time unit is a time unit used for sending the first signal. In this way, a frequency unit set used for sending the first signal may be matched based on different types of first time units, so that the terminal device sends the first signal to the network device on the uplink subband of the first time unit. In a subband full-duplex scenario, uplink resources of the duplex time unit and the uplink time unit can be fully used, thereby improving uplink coverage performance and reducing a communication delay.

In a possible design solution, the first signal may be carried on a configured grant first physical uplink shared channel PUSCH. The first time unit may be a time unit determined based on a configured grant periodicity and a configured grant start time unit.

In a possible design solution, the third frequency unit set may be the first frequency unit set, or the third frequency unit set may be a frequency unit set determined based on the first frequency unit set and a frequency hopping pattern. In this way, the third frequency unit set is determined based on the first frequency unit set and the frequency hopping pattern, so that the third frequency unit set can change with the frequency hopping pattern, thereby obtaining a frequency diversity gain and improving a communication rate and reliability.

In a possible design solution, the fourth frequency unit set may be the second frequency unit set. Alternatively, the fourth frequency unit set may be a frequency unit set determined based on the second frequency unit set and a frequency hopping pattern. In this way, the fourth frequency unit set is determined based on the second frequency unit set and the frequency hopping pattern, so that the fourth frequency unit set can change with the frequency hopping pattern, thereby obtaining a frequency diversity gain and improving a communication rate and reliability.

In a possible design solution, the first indication information may include first sub-indication information and second sub-indication information, the first sub-indication information indicates the first frequency unit set, and the second sub-indication information indicates the second frequency unit set. The first sub-indication information may be carried in radio resource control RRC signaling, and the second sub-indication information may be carried in downlink control information DCI. Alternatively, the first sub-indication information may be carried in the DCI, and the second sub-indication information may be carried in the RRC signaling. In this way, two frequency resource sets may be simultaneously indicated without increasing DCI signaling overheads.

In a possible design solution, the method provided in the first aspect may further include: The terminal device receives second indication information from the network device. The second indication information indicates a plurality of candidate frequency unit sets. The first frequency unit set is one of the plurality of candidate frequency unit sets, and/or the second frequency unit set is one of the plurality of candidate frequency unit sets. In this way, a frequency unit set used for sending the first signal can be dynamically and flexibly switched based on a position of the uplink subband, so that an uplink resource of the duplex time unit is fully used, thereby further improving uplink coverage performance and reducing a communication delay.

In a possible design solution, the first indication information may further indicate one or more of the following corresponding to the first time unit: a modulation and coding scheme MCS, a frequency hopping interval, or precoding and a quantity of layers.

According to a second aspect, an uplink transmission method is provided. The uplink transmission method includes: A terminal device receives third indication information from a network device. The third indication information indicates a fifth frequency unit set. The terminal device sends a second signal on a sixth frequency unit set corresponding to a second time unit if the second time unit is a duplex time unit. The sixth frequency unit set is a frequency unit set determined based on the fifth frequency unit set, and a frequency range of the sixth frequency unit set is within a range of an uplink subband of the second time unit. A frequency range of at least a part of frequency units of the fifth frequency unit set is different from the frequency range of the uplink subband corresponding to the second time unit. The second time unit is a time unit used for sending the second signal, and one frequency unit set includes one or more frequency units.

Based on the uplink transmission method provided in the second aspect, the terminal device may receive the third indication information from the network device, to obtain the fifth frequency unit set. When the time unit used for sending the second signal is the duplex time unit, the terminal device sends the second signal based on the sixth frequency unit set corresponding to the second time unit. The sixth frequency unit set is a frequency unit set determined based on the fifth frequency unit set, a frequency range of the sixth frequency unit set is within a range of the uplink subband of the second time unit, and a frequency range of at least a part of frequency units of the fifth frequency unit set is different from the frequency range of the uplink subband corresponding to the second time unit. In this way, the terminal device can send the second signal on the uplink subband of the second time unit. In a subband full-duplex scenario, uplink resources of the duplex time unit and the uplink time unit can be fully used, thereby improving uplink coverage performance and reducing a communication delay.

In a possible design solution, the second signal may be carried on a configured grant second physical uplink shared channel PUSCH. The second time unit may be a time unit determined based on a configured grant periodicity and a configured grant start time unit.

In a possible design solution, the sixth frequency unit set may be a frequency unit set determined based on the fifth frequency unit set. Alternatively, the sixth frequency unit set may be a frequency unit set determined based on the fifth frequency unit set and a frequency hopping pattern. In this way, the sixth frequency unit set is determined based on the fifth frequency unit set and the frequency hopping pattern, so that the fourth frequency unit set can change with the frequency hopping pattern, thereby obtaining a frequency diversity gain and improving a communication rate and reliability.

In a possible design solution, a quantity of frequency units between a start frequency and an end frequency of the sixth frequency unit set may be determined based on one or more of the following: a quantity of frequency units in the fifth frequency unit set, a first scaling parameter, a second scaling parameter, or a quantity of frequency units in the uplink subband corresponding to the second time unit. In this way, the quantity of frequency units between the start frequency and the end frequency of the sixth frequency unit set may be determined based on different parameters, thereby improving flexibility of the quantity of frequency units between the start frequency and the end frequency of the sixth frequency unit set.

Optionally, a quantity of frequency units between a start frequency and an end frequency of the fifth frequency unit set is a first quantity, a quantity of frequency units between a start frequency and an end frequency of the sixth frequency unit set is a second quantity, and the second quantity may be determined based on the first quantity and a first scaling parameter.

Further, the second quantity may satisfy the following relationship: $L_{PUSCH,2} = [L_{PUSCH,1} \times \beta]$. $L_{PUSCH,2}$ is the second quantity, $L_{PUSCH,1}$ is the first quantity, $\beta$ is the first scaling parameter, $0 < \beta < 1$, and [ ] is a rounding operation. The rounding operation includes rounding up, rounding down, or rounding off.

Optionally, a quantity of frequency units between a start frequency and an end frequency of the fifth frequency unit set is a first quantity, and a quantity of frequency units between a start frequency and an end frequency of the sixth frequency unit set is a second quantity. The second quantity may be equal to a quantity of frequency units in the uplink subband corresponding to the second time unit. Alternatively, the second quantity is equal to the first quantity.

Optionally, a quantity of frequency units between a start frequency and an end frequency of the sixth frequency unit set is a second quantity, and the second quantity may be determined based on a second scaling parameter and a quantity of frequency units in the uplink subband corresponding to the second time unit.

Further, the second quantity may satisfy the following relationship: $L_{PUSCH,2} = N_{UL\ subband}^{size}/\gamma$. $L_{PUSCH,2}$ is the second quantity, $N_{UL\ subband}^{size}$ is the quantity of frequency units in the uplink subband corresponding to the second time unit, $\gamma$ is the second scaling parameter, and $\gamma > 1$.

Optionally, a quantity of frequency units between a start frequency and an end frequency of the fifth frequency unit set is a first quantity, and a quantity of frequency units between a start frequency and an end frequency of the sixth frequency unit set is a second quantity. If the first quantity is less than or equal to the quantity of frequency units in the uplink subband corresponding to the second time unit, the second quantity may be equal to the quantity of frequency units in the fifth frequency unit set. Alternatively, if the first quantity is greater than the quantity of frequency units in the uplink subband corresponding to the second time unit, and the quantity of frequency units in the fifth frequency unit is less than or equal to the quantity of frequency units in the uplink subband corresponding to the second time unit, the quantity of frequency units in the sixth frequency unit set may be equal to the quantity of frequency units in the fifth frequency unit set. Alternatively, if the first quantity is greater than the quantity of frequency units in the uplink subband corresponding to the second time unit, and the quantity of frequency units in the fifth frequency unit is greater than the quantity of frequency units in the uplink subband corresponding to the second time unit, the quantity of frequency units in the sixth frequency unit set may be less than or equal to the quantity of frequency units in the uplink subband corresponding to the second time unit.

In a possible design solution, a start frequency unit of the sixth frequency unit set is determined based on one or more of the following: a start frequency unit of the fifth frequency unit set, the quantity of frequency units in the uplink subband corresponding to the second time unit, a start frequency unit of the uplink subband corresponding to the second time unit, a third scaling parameter, or the quantity of frequency units between the start frequency and the end frequency of the sixth frequency unit set.

Optionally, a start frequency unit of the sixth frequency unit set may be determined based on a result of a modulo operation of an index of a start frequency unit of the fifth frequency unit set on the quantity of frequency units in the uplink subband corresponding to the second time unit.

Further, if the frequency unit is a resource block, the start frequency unit of the sixth frequency unit set may satisfy the following relationship: $RB_{PUSCH}^{start,2} = RB_{PUSCH}^{start,1} mod N_{UL\ subband}^{size,RB}$, or $RB_{PUSCH}^{start,2} = RB_{PUSCH}^{start,1} mod N_{UL\ subband}^{size,RB} + RB_{UL\ Subband}^{start}$. Alternatively, if the frequency unit is a resource block group, the start frequency unit of the sixth frequency unit set satisfies the following relationship: $RBG_{PUSCH}^{start,2} = RBG_{PUSCH}^{start,1} mod N_{UL\ subband}^{size,RBG}$, or $RBG_{PUSCH}^{start,2} = RBG_{PUSCH}^{start,1} mod N_{UL\ subband}^{size,RBG} + RBG_{UL\ Subband}^{start}$. $RB_{PUSCH}^{start,2}$ is an index of a start resource block of the sixth frequency unit set, $RB_{PUSCH}^{start,1}$ is an index of a start resource block of the fifth frequency unit set, $N_{UL\ subband}^{size,RB}$ is a quantity of resource blocks in the uplink subband corresponding to the second time unit, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $RBG_{PUSCH}^{start,1}$ is an index of a start resource block group of the fifth frequency unit set, $N_{UL\ subband}^{size,RBG}$ is a quantity of resource block groups in the uplink subband corresponding to the second time unit, $RBG_{UL\ Subband}^{start}$ is an index of a start resource block group of the uplink subband corresponding to the second time unit, and mod is a modulo operation.

Optionally, a start frequency unit of the sixth frequency unit set may be determined based on a start frequency unit of the fifth frequency unit set and a third scaling parameter.

Further, if the frequency unit is a resource block, the start frequency unit of the sixth frequency unit set may satisfy the following relationship: $RB_{PUSCH}^{start,2} = \lceil RB_{PUSCH}^{start,1} \times \alpha \rceil$, or $RB_{PUSCH}^{start,2} = \lceil RB_{PUSCH}^{start,1} \times \alpha \rceil + RB_{UL\ Subband}^{start}$. Alternatively, if the frequency unit is a resource block group, the start frequency unit of the sixth frequency unit set satisfies the following relationship: $RBG_{PUSCH}^{start,2} = \left[RBG_{PUSCH}^{start,1} \times \alpha\right]$, or $RBG_{PUSCH}^{start,2} = \left[RBG_{PUSCH}^{start,1} \times \alpha\right] + RBG_{UL\ Subband}^{start}$. $RB_{PUSCH}^{start,2}$ is an index of a start resource block of the sixth frequency unit set, $RB_{PUSCH}^{start,1}$ is an index of a start resource block of the fifth frequency unit set, $\alpha$ is the third scaling parameter, $0 < \alpha < 1$, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $RBG_{PUSCH}^{start,1}$ is an index of a start resource block group of the fifth frequency unit set, $RBG_{UL\ Subband}^{start}$ is an index of a start resource block group of the uplink subband corresponding to the second time unit, and [ ] is a rounding operation. The rounding operation includes rounding up, rounding down, or rounding off.

Optionally, a start frequency unit of the sixth frequency unit set may be a start frequency unit of the uplink subband corresponding to the second time unit. Alternatively, the start frequency unit of the sixth frequency unit set may be a start frequency unit of the fifth frequency unit set. Alternatively, if the frequency unit is a resource block, the start frequency unit of the sixth frequency unit set may satisfy the following relationship: $RB_{PUSCH}^{start,2} = N_{UL\ subband}^{size,RB} - L_{PUSCH,2}^{RB} + RB_{UL\ Subband}^{start}$. Alternatively, if the frequency unit is a resource block group, the start frequency unit of the sixth frequency unit set may satisfy the following relationship: $RBG_{PUSCH}^{start,2} = N_{UL\ subband}^{size,RBG} - L_{PUSCH,2}^{RBG} + RBG_{UL\ Subband}^{start}$. Alternatively, if the frequency unit is a resource block, the start frequency unit of the sixth frequency unit set may satisfy the following relationship: $RB_{PUSCH}^{start,2} = \left[\left(N_{UL\ subband}^{size,RB} - L_{PUSCH,2}^{RB}\right)/2\right] + RB_{UL\ Subband}^{start}$. Alternatively, if the frequency unit is a resource block group, the start frequency unit of the sixth frequency unit set may satisfy the following relationship: $RBG_{PUSCH}^{start,2} = \left[\left(N_{UL\ subband}^{size,RBG} - L_{PUSCH,2}^{RBG}\right)/2\right] + RBG_{UL\ Subband}^{start}$. $RB_{PUSCH}^{start,2}$ is an index of a start resource block of the sixth frequency unit set, $N_{UL\ subband}^{size,RB}$ is a quantity of resource blocks in the uplink subband corresponding to the second time unit, $L_{PUSCH,2}^{RB}$ is a second quantity measured in resource blocks, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $N_{UL\ subband}^{size,RBG}$ is a quantity of resource block groups in the uplink subband corresponding to the second time unit, $L_{PUSCH,2}^{RBG}$ is a second quantity measured in resource block groups, and $RBG_{UL\ Subband}^{start}$ is an index of a start resource block group of the uplink subband corresponding to the second time unit.

According to a third aspect, an uplink transmission method is provided. The uplink transmission method includes: A terminal device receives fourth indication information from a network device. The fourth indication information indicates a seventh frequency unit set. If a plurality of third time units used for transmitting a third signal include an uplink time unit, and a 1st third time unit in a configured periodicity is a duplex time unit, the terminal device sends the third signal on an eighth frequency unit set corresponding to each of the plurality of third time units. The third time unit is a time unit used for sending the third signal in one configured grant periodicity, and there are a plurality of third time units. A frequency range of the seventh frequency unit set is outside a frequency range of an uplink subband of the 1st third time unit. The eighth frequency unit set corresponding to the third time unit is determined based on the seventh frequency unit set, and a frequency range of the eighth frequency unit set corresponding to one third time unit is within a frequency range of an uplink subband of the third time unit. One frequency unit set includes one or more frequency units.

Based on the uplink transmission method provided in the third aspect, the terminal device may receive the fourth indication information. When the third time unit includes the uplink time unit, and the 1st third time unit is the duplex time unit, the terminal device sends the third signal based on the eighth frequency resource set of the third time unit. The fourth indication information indicates the seventh frequency unit set, the frequency range of the seventh frequency unit set is outside the frequency range of the uplink subband of the 1st third time unit, and the eighth frequency unit set is determined based on the seventh frequency unit set. In this way, a frequency unit set matching an uplink subband of the uplink time unit is configured, so that a frequency resource that is on the third time unit and that is used for sending the third signal can be outside a range of the uplink subband of the third time unit. In a subband full-duplex scenario, uplink resources of the duplex time unit and the uplink time unit can be fully used, thereby improving uplink coverage performance and reducing a communication delay.

In a possible design solution, the third signal may be carried on a configured grant third physical uplink shared channel PUSCH. The 1st third time unit may be a time unit determined based on a configured grant periodicity and a configured grant start time unit.

In a possible design solution, the eighth frequency unit set may be the seventh frequency unit set. Alternatively, the eighth frequency unit set may be a frequency unit set determined based on the seventh frequency unit set and a frequency hopping pattern.

In a possible design solution, the method provided in the third aspect may further include: The terminal device receives fifth indication information from the network device. The fifth indication information indicates a plurality of candidate frequency unit sets. The seventh frequency unit set is one of the plurality of candidate frequency unit sets.

In a possible design solution, the fourth indication information may further indicate one or more of the following corresponding to the third time unit: a modulation and coding scheme MCS, a frequency hopping interval, or precoding and a quantity of layers.

According to a fourth aspect, an uplink transmission method is provided. The uplink transmission method includes: A network device sends first indication information to a terminal device. The first indication information indicates a first frequency unit set and a second frequency unit set. The network device receives a first signal on a third frequency unit set corresponding to a first time unit if a type of the first time unit is an uplink time unit. The third frequency unit set is a frequency unit set determined based on the first frequency unit set. The network device receives the first signal on a fourth frequency unit set corresponding to the first time unit if the type of the first time unit is a duplex time unit. The fourth frequency unit set is a frequency unit set determined based on the second frequency unit set, and a frequency range of the fourth frequency unit set is within a frequency range of an uplink subband of the first time unit. The first time unit is a time unit used for receiving the first signal, and one frequency unit set includes one or more frequency units.

Based on the uplink transmission method provided in the fourth aspect, the network device may send the first indication information. When the first time unit is the uplink time unit, the network device receives the first signal based on the third frequency unit set determined based on the first frequency unit set indicated by the first indication information. When the first time unit is the duplex time unit, the network device receives the first signal based on the fourth frequency unit set determined based on the second frequency unit set indicated by the first indication information. The frequency range of the fourth frequency unit is within the frequency range of the uplink subband of the first time unit. The first time unit is a time unit used for receiving the first signal. In this way, a frequency unit set used for receiving the first signal may be matched based on different first time units, so that the first signal can be transmitted on the uplink subband of the first time unit. In a subband full-duplex scenario, uplink resources of the duplex time unit and the uplink time unit can be fully used, thereby improving uplink coverage performance and reducing a communication delay.

In a possible design solution, the first signal may be carried on a configured grant first physical uplink shared channel PUSCH. The first time unit may be a time unit determined based on a configured grant periodicity and a configured grant start time unit.

In a possible design solution, the third frequency unit set may be the first frequency unit set. Alternatively, the third frequency unit set may be a frequency unit set determined based on the first frequency unit set and a frequency hopping pattern. In this way, the third frequency unit set is determined based on the first frequency unit set and the frequency hopping pattern, so that the third frequency unit set can change with the frequency hopping pattern, thereby obtaining a frequency diversity gain and improving a communication rate and reliability.

In a possible design solution, the fourth frequency unit set may be the second frequency unit set. Alternatively, the fourth frequency unit set may be a frequency unit set determined based on the second frequency unit set and a frequency hopping pattern. In this way, the fourth frequency unit set is determined based on the second frequency unit set and the frequency hopping pattern, so that the fourth frequency unit set can change with the frequency hopping pattern, thereby obtaining a frequency diversity gain and improving a communication rate and reliability.

In a possible design solution, the first indication information may include first sub-indication information and second sub-indication information, the first sub-indication information indicates the first frequency unit set, and the second sub-indication information indicates the second frequency unit set. The first sub-indication information may be carried in radio resource control RRC signaling, and the second sub-indication information may be carried in downlink control information DCI. Alternatively, the first sub-indication information may be carried in the DCI, and the second sub-indication information may be carried in the RRC signaling. In this way, two frequency resource sets may be simultaneously indicated without increasing DCI signaling overheads.

In a possible design solution, the method provided in the fourth aspect may further include: The network device sends second indication information to the terminal device. The second indication information indicates a plurality of candidate frequency unit sets. The first frequency unit set is one of the plurality of candidate frequency unit sets, and/or the second frequency unit set is one of the plurality of candidate frequency unit sets. In this way, a frequency unit set used for sending the first signal can be dynamically and flexibly switched based on a position of the uplink subband, so that an uplink resource of the duplex time unit is fully used, thereby further improving uplink coverage performance and reducing a communication delay.

In a possible design solution, the first indication information further indicates one or more of the following corresponding to the first time unit: a modulation and coding scheme MCS, a frequency hopping interval, or precoding and a quantity of layers.

According to a fifth aspect, an uplink transmission method is provided. The uplink transmission method includes: A network device sends third indication information to a terminal device. The third indication information indicates a fifth frequency unit set. The network device receives a second signal on a sixth frequency unit set corresponding to a second time unit if the second time unit is a duplex time unit. The sixth frequency unit set is a frequency unit set determined based on the fifth frequency unit set, and a frequency range of the sixth frequency unit set is within a range of an uplink subband of the second time unit. A frequency range of at least a part of frequency units of the fifth frequency unit set is different from the frequency range of the uplink subband corresponding to the second time unit. The second time unit is a time unit used for sending the second signal, and one frequency unit set includes one or more frequency units.

Based on the uplink transmission method provided in the fifth aspect, the network device may send third indication information to the terminal device, to indicate the fifth frequency unit set. When the time unit used for receiving the second signal is the duplex time unit, the network device receives the second signal based on the sixth frequency unit set corresponding to the second time unit. The sixth frequency unit set is a frequency unit set determined based on the fifth frequency unit set, a frequency range of the sixth frequency unit set is within a range of the uplink subband of the second time unit, and a frequency range of at least a part of frequency units of the fifth frequency unit set is different from the frequency range of the uplink subband corresponding to the second time unit. In this way, the second signal can be transmitted on the uplink subband of the second time unit. In a subband full-duplex scenario, uplink resources of the duplex time unit and the uplink time unit can be fully used, thereby improving uplink coverage performance and reducing a communication delay.

In a possible design solution, the second signal may be carried on a configured grant second physical uplink shared channel PUSCH. The second time unit may be a time unit determined based on a configured grant periodicity and a configured grant start time unit.

In a possible design solution, the sixth frequency unit set may be a frequency unit set determined based on the fifth frequency unit set. Alternatively, the sixth frequency unit set may be a frequency unit set determined based on the fifth frequency unit set and a frequency hopping pattern.

In a possible design solution, a quantity of frequency units between a start frequency and an end frequency of the sixth frequency unit set may be determined based on one or more of the following: a quantity of frequency units in the fifth frequency unit set, a first scaling parameter, a second scaling parameter, or a quantity of frequency units in the uplink subband corresponding to the second time unit.

Optionally, a quantity of frequency units between a start frequency and an end frequency of the fifth frequency unit set is a first quantity, a quantity of frequency units between a start frequency and an end frequency of the sixth frequency unit set is a second quantity, and the second quantity may be determined based on the first quantity and a first scaling parameter.

Further, the second quantity may satisfy the following relationship: $L_{PUSCH,2}=[L_{PUSCH,1}\times\beta]$. $L_{PUSCH,2}$ is the second quantity, $L_{PUSCH,1}$ is the first quantity, $\beta$ is the first scaling parameter, $0<\beta<1$, and [ ] is a rounding operation. The rounding operation includes rounding up, rounding down, or rounding off.

Optionally, a quantity of frequency units between a start frequency and an end frequency of the fifth frequency unit set is a first quantity, and a quantity of frequency units between a start frequency and an end frequency of the sixth frequency unit set is a second quantity. The second quantity may be equal to a quantity of frequency units in the uplink subband corresponding to the second time unit. Alternatively, the second quantity may be equal to the first quantity.

Optionally, a quantity of frequency units between a start frequency and an end frequency of the sixth frequency unit set is a second quantity, and the second quantity may be determined based on a second scaling parameter and a quantity of frequency units in the uplink subband corresponding to the second time unit.

Further, the second quantity satisfies the following relationship: $L_{PUSCH,2} = N_{UL\ subband}^{size}/\gamma$ . $L_{PUSCH,2}$ is the second quantity, $N_{UL\ subband}^{size}$ is the quantity of frequency units in the uplink subband corresponding to the second time unit, $\gamma$ is the second scaling parameter, and $\gamma > 1$.

Optionally, a quantity of frequency units between a start frequency and an end frequency of the fifth frequency unit set is a first quantity, and a quantity of frequency units between a start frequency and an end frequency of the sixth frequency unit set is a second quantity. If the first quantity is less than or equal to the quantity of frequency units in the uplink subband corresponding to the second time unit, the second quantity may be equal to the quantity of frequency units in the fifth frequency unit set. Alternatively, if the first quantity is greater than the quantity of frequency units in the uplink subband corresponding to the second time unit, and the quantity of frequency units in the fifth frequency unit is less than or equal to the quantity of frequency units in the uplink subband corresponding to the second time unit, the quantity of frequency units in the sixth frequency unit set may be equal to the quantity of frequency units in the fifth frequency unit set. Alternatively, if the first quantity is greater than the quantity of frequency units in the uplink subband corresponding to the second time unit, and the quantity of frequency units in the fifth frequency unit is greater than the quantity of frequency units in the uplink subband corresponding to the second time unit, the quantity of frequency units in the sixth frequency unit set may be less than or equal to the quantity of frequency units in the uplink subband corresponding to the second time unit.

In a possible design solution, a start frequency unit of the sixth frequency unit set may be determined based on one or more of the following: a start frequency unit of the fifth frequency unit set, the quantity of frequency units in the uplink subband corresponding to the second time unit, a start frequency unit of the uplink subband corresponding to the second time unit, a third scaling parameter, or the quantity of frequency units between the start frequency and the end frequency of the sixth frequency unit set.

Optionally, a start frequency unit of the sixth frequency unit set may be determined based on a result of a modulo operation of an index of a start frequency unit of the fifth frequency unit set on the quantity of frequency units in the uplink subband corresponding to the second time unit.

Further, if the frequency unit is a resource block, the start frequency unit of the sixth frequency unit set may satisfy the following relationship: $RB_{PUSCH}^{start,2} = RB_{PUSCH}^{start,1} \bmod N_{UL\ subband}^{size,RB}$, or $RB_{PUSCH}^{start,5} = RB_{PUSCH}^{start,1} \bmod N_{UL\ subband}^{size,RB} + RB_{UL\ Subband}^{start}$. Alternatively, if the frequency unit is a resource block group, the start frequency unit of the sixth frequency unit set satisfies the following relationship: $RBG_{PUSCH}^{start,2} = RBG_{PUSCH}^{start,1} \bmod N_{UL\ subband}^{size,RBG}$, or $RBG_{PUSCH}^{start,2} = RBG_{PUSCH}^{start,1} \bmod N_{UL\ subband}^{size,RBG} + RBG_{UL\ Subband}^{start}$. $RBG_{PUSCH}^{start,2}$ is an index of a start resource block of the sixth frequency unit set, $RB_{PUSCH}^{start,1}$ is an index of a start resource block of the fifth frequency unit set, $N_{UL\ subband}^{size,RB}$ is a quantity of resource blocks in the uplink subband corresponding to the second time unit, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $RBG_{PUSCH}^{start,1}$ is an index of a start resource block group of the fifth frequency unit set, $N_{UL\ subband}^{size,RBG}$ is a quantity of resource block groups in the uplink subband corresponding to the second time unit, $RBG_{UL\ Subband}^{start}$ is an index of a start resource block group of the uplink subband corresponding to the second time unit, and mod is a modulo operation.

Optionally, a start frequency unit of the sixth frequency unit set may be determined based on a start frequency unit of the fifth frequency unit set and a third scaling parameter.

Further, if the frequency unit is a resource block, the start frequency unit of the sixth frequency unit set may satisfy the following relationship: $RB_{PUSCH}^{start,2} = \left[ RB_{PUSCH}^{start,1} \times \alpha \right]$, or $RB_{PUSCH}^{start,2} = \left[ RB_{PUSCH}^{start,1} \times \alpha \right] + RB_{UL\ Subband}^{start}$. Alternatively, if the frequency unit is a resource block group, the start frequency unit of the sixth frequency unit set may satisfy the following relationship: $RBG_{PUSCH}^{start,2} = \left[ RBG_{PUSCH}^{start,1} \times \alpha \right]$, or $RBG_{PUSCH}^{start,2} = \left[ RBG_{PUSCH}^{start,1} \times \alpha \right] + RBG_{UL\ Subband}^{start}$. $RB_{PUSCH}^{start,2}$ is an index of a start resource block of the sixth frequency unit set, $RB_{PUSCH}^{start,1}$ is an index of a start resource block of the fifth frequency unit set, $\alpha$ is the third scaling parameter, $0 < \alpha < 1$, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $RBG_{PUSCH}^{start,1}$ is an index of a start resource block group of the fifth frequency unit set, $RBG_{UL\ Subband}^{start}$ is an index of a start resource block group of the uplink subband corresponding to the second time unit, and [ ] is a rounding operation. The rounding operation includes rounding up, rounding down, or rounding off.

Optionally, a start frequency unit of the sixth frequency unit set may be a start frequency unit of the uplink subband corresponding to the second time unit. Alternatively, the start frequency unit of the sixth frequency unit set may be a start frequency unit of the fifth frequency unit set. Alternatively, if the frequency unit is a resource block, the start frequency unit of the sixth frequency unit set may satisfy the following relationship: $RB_{PUSCH}^{start,2} =$

$N_{UL\ subband}^{size,RB} - L_{PUSCH,2}^{RB} + RB_{UL\ Subband}^{start}$ . Alternatively, if the frequency unit is a resource block group, the start frequency unit of the sixth frequency unit set may satisfy the following relationship: $RBG_{PUSCH}^{start,2} = N_{UL\ subband}^{size,RBG} - L_{PUSCH,2}^{RBG} + RBG_{UL\ Subband}^{start}$ . Alternatively, if the frequency unit is a resource block, the start frequency unit of the sixth frequency unit set may satisfy the following relationship: $RB_{PUSCH}^{start,2} = [(N_{UL\ subband}^{size,RB} - L_{PUSCH,2}^{RB})/2] + RB_{UL\ Subband}^{start}$ . Alternatively, if the frequency unit is a resource block group, the start frequency unit of the sixth frequency unit set may satisfy the following relationship: $RBG_{PUSCH}^{start,2} = [(N_{UL\ subband}^{size,RBG} - L_{PUSCH,2}^{RBG})/2] + RBG_{UL\ Subband}^{start}$ . $RB_{PUSCH}^{start,2}$ is an index of a start resource block of the sixth frequency unit set, $N_{UL\ subband}^{size,RB}$ is a quantity of resource blocks in the uplink subband corresponding to the second time unit, $L_{PUSCH,2}^{RB}$ is a second quantity measured in resource blocks, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $N_{UL\ subband}^{size,RBG}$ is a quantity of resource block groups in the uplink subband corresponding to the second time unit, $L_{PUSCH,2}^{RBG}$ is a second quantity measured in resource block groups, and $RBG_{UL\ Subband}^{start}$ is an index of a start resource block group of the uplink subband corresponding to the second time unit.

According to a sixth aspect, an uplink transmission method is provided. The uplink transmission method includes: A network device sends fourth indication information to a terminal device. The fourth indication information indicates a seventh frequency unit set. If a plurality of third time units used for transmitting a third signal include an uplink time unit, and a 1st third time unit is a duplex time unit, the network device receives the third signal on an eighth frequency unit set corresponding to each of the plurality of third time units. The third time unit is a time unit used for sending the third signal in one configured grant periodicity, and there are a plurality of third time units. A frequency range of the seventh frequency unit set is outside a frequency range of an uplink subband of the 1st third time unit. The eighth frequency unit set corresponding to the third time unit is determined based on the seventh frequency unit set, and a frequency range of the eighth frequency unit set corresponding to one third time unit is within a frequency range of an uplink subband of the third time unit. One frequency unit set includes one or more frequency units.

Based on the uplink transmission method provided in the sixth aspect, the network device may send the fourth indication information. When the third time unit includes the uplink time unit, and the 1st third time unit is the duplex time unit, the network device receives the third signal based on the eighth frequency resource set of the third time unit. The fourth indication information indicates the seventh frequency unit set, the frequency range of the seventh frequency unit set is outside the frequency range of the uplink subband of the 1st third time unit, and the eighth frequency unit set is determined based on the seventh frequency unit set. In this way, a frequency unit set matching an uplink subband of the uplink time unit is configured, so that a frequency resource that is on the third time unit and that is used for transmitting the third signal can be within a range of the uplink subband of the third time unit. In a subband full-duplex scenario, uplink resources of the duplex time unit and the uplink time unit can be fully used, thereby improving uplink coverage performance and reducing a communication delay.

In a possible design solution, the third signal may be carried on a configured grant third physical uplink shared channel PUSCH. The 1st third time unit may be a time unit determined based on a configured grant periodicity and a configured grant start time unit.

In a possible design solution, the eighth frequency unit set may be the seventh frequency unit set. Alternatively, the eighth frequency unit set may be a frequency unit set determined based on the seventh frequency unit set and a frequency hopping pattern.

In a possible design solution, the method provided in the sixth aspect may further include: The network device sends fifth indication information to the terminal device. The fifth indication information indicates a plurality of candidate frequency unit sets. The seventh frequency unit set is one of the plurality of candidate frequency unit sets.

In a possible design solution, the fourth indication information may further indicate one or more of the following corresponding to the third time unit: a modulation and coding scheme MCS, a frequency hopping interval, or precoding and a quantity of layers.

According to a seventh aspect, a communication apparatus is provided. The communication apparatus is configured to perform the uplink transmission method according to any one of the implementations of the first aspect to the sixth aspect.

In this application, the communication apparatus according to the seventh aspect may be the terminal device according to any one of the first aspect, the third aspect, or the fifth aspect, the network device according to any one of the second aspect, the fourth aspect, or the sixth aspect, a chip (system) or another part or component that can be disposed in the terminal device or the network device, or an apparatus including the terminal device or the network device.

It should be understood that the communication apparatus according to the seventh aspect includes a corresponding module, unit, or means (means) for implementing the uplink transmission method according to any one of the first aspect to the sixth aspect. The module, unit, or means may be implemented by hardware, may be implemented by software, or may be implemented by hardware executing corresponding software. The hardware or the software includes one or more modules or units configured to perform functions related to the foregoing uplink transmission method.

According to an eighth aspect, a communication apparatus is provided. The communication apparatus includes a processor. The processor is configured to perform the uplink transmission method according to any one of the possible implementations of the first aspect to the sixth aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In a possible design solution, the communication apparatus according to the eighth aspect may further include a memory. The memory and the processor may be integrated together, or may be disposed separately. The memory may be configured to store a computer program and/or data related to the uplink transmission method according to any one of the first aspect to the sixth aspect.

In this application, the communication apparatus according to the eighth aspect may be the terminal device according to any one of the first aspect, the third aspect, or the fifth aspect, the network device according to any one of the second aspect, the fourth aspect, or the sixth aspect, a chip (system) or another part or component that can be disposed in the terminal device or the network device, or an apparatus including the terminal device or the network device.

According to a ninth aspect, a communication apparatus is provided. The communication apparatus includes a processor. The processor is coupled to a memory, and the processor is configured to execute a computer program stored in the memory, to enable the communication apparatus to perform the uplink transmission method according to any one of the possible implementations of the first aspect to the sixth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this application, the communication apparatus according to the ninth aspect may be the terminal device according to any one of the first aspect, the third aspect, or the fifth aspect, the network device according to any one of the second aspect, the fourth aspect, or the sixth aspect, a chip (system) or another part or component that can be disposed in the terminal device or the network device, or an apparatus including the terminal device or the network device.

According to a tenth aspect, a communication apparatus is provided, including a processor and a memory. The memory is configured to store a computer program. When the processor executes the computer program, the communication apparatus is enabled to perform the uplink transmission method according to any one of the implementations of the first aspect to the sixth aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In this application, the communication apparatus according to the tenth aspect may be the terminal device according to any one of the first aspect, the third aspect, or the fifth aspect, the network device according to any one of the second aspect, the fourth aspect, or the sixth aspect, a chip (system) or another part or component that can be disposed in the terminal device or the network device, or an apparatus including the terminal device or the network device.

According to an eleventh aspect, a communication apparatus is provided, including a processor. The processor is configured to: be coupled to a memory; and after reading a computer program in the memory, perform, based on the computer program, the uplink transmission method according to any one of the implementations of the first aspect to the sixth aspect.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In this application, the communication apparatus according to the ninth aspect may be the terminal device according to any one of the first aspect, the third aspect, or the fifth aspect, the network device according to any one of the second aspect, the fourth aspect, or the sixth aspect, a chip (system) or another part or component that can be disposed in the terminal device or the network device, or an apparatus including the terminal device or the network device.

In addition, for technical effects of the communication apparatus according to the seventh aspect to the eleventh aspect, refer to technical effects of the uplink transmission method according to the first aspect to the sixth aspect. Details are not described herein again.

According to a twelfth aspect, a processor is provided. The processor is configured to perform the uplink transmission method according to any one of the possible implementations of the first aspect to the sixth aspect.

According to a thirteenth aspect, a communication system is provided. The communication system includes one or more terminal devices and one or more network devices.

According to a fourteenth aspect, a computer-readable storage medium is provided, including a computer program or instructions. When the computer program or the instructions are run on a computer, the computer is enabled to perform the uplink transmission method according to any one of the possible implementations of the first aspect to the sixth aspect.

According to a fifteenth aspect, a computer program product is provided, including a computer program or instructions. When the computer program or the instructions are run on a computer, the computer is enabled to perform the uplink transmission method according to any one of the possible implementations of the first aspect to the sixth aspect.

**BRIEF DESCRIPTION OF DRAWINGS**

FIG. 1 is an example diagram of resource distribution in non-overlapping full duplex according to an embodiment of this application;

FIG. 2 is a diagram of a PUSCH position according to an embodiment of this application;

FIG. 3 is a diagram of another PUSCH position according to an embodiment of this application;

FIG. 4 is a diagram of an architecture of a communication system according to an embodiment of this application;

FIG. 5 is a schematic flowchart of an uplink transmission method according to an embodiment of this application;

FIG. 6 is a diagram of transmission of a first signal according to an embodiment of this application;

FIG. 7 is a schematic flowchart of another uplink transmission method according to an embodiment of this application;

FIG. 8 is a diagram of transmission of a second signal according to an embodiment of this application;

FIG. 9 is another diagram of transmission of a second signal according to an embodiment of this application;

FIG. 10 is a schematic flowchart of another uplink transmission method according to an embodiment of this application;

FIG. 11 is a diagram of transmission of a third signal according to an embodiment of this application;

FIG. 12 is a diagram of a structure of a communication apparatus according to an embodiment of this application; and

FIG. 13 is a diagram of a structure of another communication apparatus according to an embodiment of this application.

**DESCRIPTION OF EMBODIMENTS**

To facilitate understanding of embodiments of this application, the following first describes technical terms related to embodiments of this application.

1. Frequency unit: The frequency unit is a unit of a frequency resource. One frequency unit may be one resource block (resource block, RB), one physical resource block (physical resource block, PRB), one resource block group (resource block group, RBG), one virtual resource block (virtual resource block, VRB), or one subcarrier.

2. Frequency unit set (set): The frequency unit set is a set of frequency units, and one frequency unit set includes one or more frequency units.

3. Time unit: One time unit may include one or more slots (slots), or include one or more time domain symbols, for example, an orthogonal frequency division multiplexing (orthogonal frequency division multiplexing, OFDM) symbol. A time length of one slot varies with a subcarrier spacing (subcarrier spacing, SCS). A larger subcarrier spacing indicates a shorter time length of a slot, and a smaller subcarrier spacing indicates a longer time length of a slot. For ease of understanding, in the following embodiments, an example in which one time unit includes one slot is used for description. Details are not described below again.

4. Uplink time unit: The uplink time unit is a time unit used for uplink transmission, and all time domain symbols in the uplink time unit are uplink symbols. For example, the uplink time unit may be an uplink slot.

5. Downlink time unit: The downlink time unit is a time unit used for downlink transmission, and all time domain symbols in the downlink time unit are downlink symbols. For example, the downlink time unit may be a downlink slot.

6. Special time unit: The special time unit is a time unit that can be used for uplink transmission or downlink transmission, and a time domain symbol in the special time is a flexible symbol.

7. Uplink subband (uplink subband): The uplink subband is a frequency resource that can be used for uplink transmission in a downlink time unit or a special time unit, and a frequency range of the uplink subband is within a frequency range of an activated bandwidth part (bandwidth part, BWP).

8. In time division duplex (time division duplex, TDD), time domain resources are classified into uplink time domain resources and downlink time domain resources. For example, the time domain resources are classified based on slots. One BWP may include one or more of the following: a downlink slot D, an uplink slot U, and a special slot S. Each symbol in the downlink slot is a downlink symbol, each symbol in the uplink slot is an uplink symbol, and the special slot includes at least a flexible symbol.

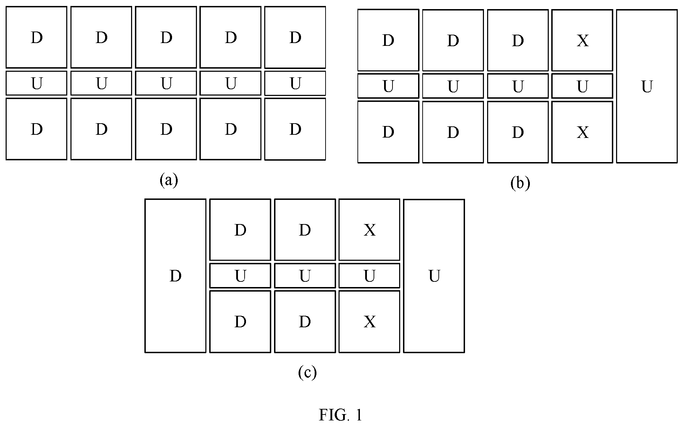

9. Non-overlapping full duplex (subband non-overlapping full duplex, SBFD): In the non-overlapping full duplex, a frequency band in a downlink slot is divided into one or more uplink subbands and one or more downlink subbands, and/or a frequency band in a special slot is divided into one or more uplink subbands. An uplink signal is allowed to be sent on an uplink subband of a downlink symbol and/or a flexible symbol. Compared with time division duplex, the non-overlapping full duplex has more uplink resources to improve uplink coverage performance, and each time unit, for example, a slot, has an uplink resource for feeding back a hybrid automatic repeat request-acknowledgment (hybrid automatic repeat request-acknowledgment, HARQ-ACK), so that a delay can be reduced. In the following, the slot is used as an example to describe resource distribution on a BWP in a non-overlapping full duplex case with reference to (a) in FIG. 1 to (c) in FIG. 1.

As shown in (a) in FIG. 1, it is assumed that one BWP includes five slots, and the five slots are all downlink slots. In this case, a frequency band (or referred to as a frequency domain resource) in each of the five slots may be divided into two downlink subbands and one uplink subband. As shown in (b) in FIG. 1, it is assumed that one BWP includes five slots, first three slots in the five slots are downlink slots, a 4th slot in the five slots is a special slot X, and a last slot in the five slots is an uplink slot. In this case, each of first four slots in the five slots is divided into two downlink subbands and one uplink subband. As shown in (c) in FIG. 1, it is assumed that one BWP includes five slots, first three slots in the five slots are downlink slots, a 4th slot in the five slots is a special slot X, and a last slot in the five slots is an uplink slot. In this case, each of a 2nd slot to the 4th slot may be divided into two downlink subbands and one uplink subband.

9. Duplex time unit: The duplex time unit may be a time unit for division of frequency resources using non-overlapping full duplex, and uplink transmission and downlink transmission may be performed at a same moment in a full duplex time unit.

10. PUSCH frequency hopping: The PUSCH frequency hopping includes two modes: intra-slot frequency hopping and inter-slot frequency hopping.

Intra-slot frequency hopping: The intra-slot frequency hopping is applicable to single-slot and multi-slot PUSCH transmission. The multi-slot PUSCH transmission includes transmission of a PUSCH repetition type A (PUSCH repetition type A) and a transport block processing over multiple slots PUSCH (transport block processing over multiple slots PUSCH, TBoMS PUSCH). The intra-slot frequency hopping pattern satisfies the following relationship:

$$RB_{start} = \begin{cases} RB_{start} & i = 0 \\ (RB_{start} + RB_{offset}) mod N_{BWP}^{size} & i = 1 \end{cases}$$

$i = 0$ and $i = 1$ respectively indicate a 1st hop and a 2nd hop, $RB_{start}$ is a start RB in an uplink BWP, and $RB_{offset}$ indicates a frequency hopping interval between two frequency hops, measured in RBs. A quantity of symbols in the 1st hop is $\lfloor N_{symb}^{PUSCH,s}/2 \rfloor$, and a quantity of symbols in the 2nd hop is $N_{symb}^{PUSCH,s} - \lfloor N_{symb}^{PUSCH,s}/2 \rfloor$. $N_{symb}^{PUSCH,s}$ is a quantity of symbols occupied for PUSCH transmission in one slot.

Inter-slot frequency hopping: The inter-slot frequency hopping is applicable to multi-slot PUSCH transmission. The inter-slot frequency hopping pattern satisfies the relationship shown in the following formula:

$$RB_{start}(n_s^\mu) = \begin{cases} RB_{start} & n_s^\mu \bmod 2 = 0 \\ (RB_{start} + RB_{offset}) mod N_{BWP}^{size} & n_s^\mu \bmod 2 = 1 \end{cases}$$

$n_s^\mu$ is a slot index of a current slot in a system frame (system radio frame), the current slot is a slot occupied for multi-slot PUSCH transmission, $RB_{start}$ indicates a start RB in an uplink BWP, and $RB_{offset}$ indicates a frequency hopping interval between two frequency hops, measured in RBs. $RB_{start}(n_s^\mu)$ is a frequency domain start position of a PUSCH after frequency hopping. *mod* is a modulo operation.

It may be understood that, when a terminal device supports demodulation reference signal bundling (demodulation reference signal, DMRS bundling), the terminal device can also support frequency hopping. In wireless communication, a PUSCH carrying a signal may be configured by a network device through a dynamic scheduling (dynamic scheduling, DS) scheme or a semi-persistent scheduling (semi-persistent scheduling, SPS) scheme. In the dynamic scheduling scheme, information used to configure the PUSCH may be carried through downlink control information (downlink control information, DCI). For a specific principle, refer to an existing implementation principle of dynamic scheduling. Details are not described herein again.

The semi-persistent scheduling scheme includes configured grant type 1 (configured grant type 1, CG type 1) and a configured grant type 2 (configured grant type 2, CG type 2). In the semi-persistent scheduling scheme, information used to configure the PUSCH may be carried through radio resource control (radio resource control, RRC) signaling or in combination with the RRC signaling and DCI. A time domain resource of the PUSCH configured by the semi-persistent scheduling scheme may be repeated based on a configured grant periodicity. For example, in the semi-persistent scheduling scheme, configuring the PUSCH may include configuring a time domain resource and a frequency domain resource of the PUSCH. The following describes PUSCH configuration principles with reference to different configured grant types.

For the time domain resource of the PUSCH, the network device may indicate a configured grant periodicity and a time domain start position of the PUSCH, for example, a start time unit, for implementation. The configured grant periodicity may be indicated through the radio resource control (radio resource control, RRC) signaling. In the configured grant type 1, the time domain start position of the PUSCH may be indicated through the RRC signaling. The terminal device can determine a time domain resource of a grant PUSCH with reference to a configured grant periodicity and a start time unit of the grant PUSCH, thereby configuring the time domain resource of the PUSCH. In the configured grant type 2, the time domain resource of the PUSCH may be indicated through the DCI. The terminal device can determine a time domain resource of a grant PUSCH with reference to a configured grant periodicity and a start time unit of the grant PUSCH, thereby configuring the time domain resource of the PUSCH.

In addition, for the frequency domain resource of the PUSCH, in the configured grant type 1, the frequency domain resource of the PUSCH may be indicated through the RRC signaling, while in the configured grant type 2, the frequency domain resource of the PUSCH may be indicated through the DCI.

An allocation manner for the frequency domain resource of the PUSCH may include the following: an uplink resource allocation type 0 (uplink resource allocation type 0) or an uplink resource allocation type 1 (uplink resource allocation type 1). In both of these uplink resource allocation types, frequency domain resource configurations for different configured grant types may be implemented through resource block allocation information. The resource block allocation information may be carried in the RRC signaling (the configured grant type 1) or the DCI (the configured grant type 2). The following describes the allocation manner for the frequency domain resource.

In the uplink resource allocation type 0, the resource block allocation information may indicate an allocation status of each frequency unit on a BWP by using one or more bits (bit bitmap), to indicate the frequency domain resource of the PUSCH. One bit (bit) may correspond to one frequency domain unit, for example, a resource block group (resource block group, RBG). For example, a bit "1" may indicate that a frequency domain unit corresponding to the bit is allocated to the terminal device, and a bit "0" may indicate that a frequency domain unit corresponding to the bit is not allocated to the terminal device. For another example, a bit "0" may indicate that a frequency domain unit corresponding to the bit is allocated to the terminal device, and a bit "1" may indicate that a frequency domain unit corresponding to the bit is not allocated to the terminal device. In other words, in the uplink resource allocation type 0, the frequency domain resource of the PUSCH is allocated in a form of a bitmap. For example, in a BWP of the terminal device, each RBG corresponds to one bit. If one field is "001010100", frequency domain units corresponding to a 3rd bit, a 5th bit, and a 7th bit from left to right are allocated to the terminal device. In this way, the frequency domain resource of the PUSCH may be determined based on a frequency domain resource allocated to the terminal device.

In the uplink resource allocation type 1, the resource block allocation information may indicate a start virtual resource block of the PUSCH and a length of a contiguously allocated virtual resource block by using a resource indication value (resource indication value, RIV), that is, indicate a virtual resource block in an activated bandwidth part, thereby configuring the frequency domain resource of the physical uplink shared channel. The resource indication value satisfies the following relationship:

if $L_{RBs} - 1 \le \lfloor N_{BWP}^{size}/2 \rfloor$, $RIV = N_{BWP}^{size}(L_{RBs} - 1) + RB_{start}$; or if $L_{RBs} - 1 > \lfloor N_{BWP}^{size}/2 \rfloor$, $RIV = N_{BWP}^{size}(N_{BWP}^{size} - L_{RBs} + 1) + (N_{BWP}^{size} - 1 - RB_{start})$

$N_{BWP}^{size} - RB_{start} \ge L_{RBs} \ge 1$, $L_{RBS}$ is the length of the contiguously allocated virtual resource blocks, $N_{BWP}^{size}$ is a quantity of resource blocks in the bandwidth part, *RIV* is the resource indication value, and $RB_{start}$ is the start virtual resource block. In the resource allocation type 0 or the resource allocation type 1, the resource block allocation information indicates only one frequency resource set. In a case of no frequency hopping, a frequency resource of the PUSCH is a frequency resource set indicated by the resource block allocation information. In a case of frequency hopping, the frequency resource of the PUSCH is determined based on the frequency resource set indicated by the resource block allocation information and a frequency hopping pattern. In this way, a determined frequency range of the PUSCH may be within a frequency range of the BWP.

When a BWP configured by the network device for the terminal device includes a duplex time unit, because a frequency range of an uplink subband on the duplex time unit is a part within the BWP, a frequency range of at least a part of frequency resources of the PUSCH may be outside the frequency range of the uplink subband (which may also be referred to as an uplink frequency resource or an uplink frequency domain resource).

The following uses an example to describe a case in which the frequency range of at least a part of frequency resources of the PUSCH is outside the frequency range of the uplink subband.

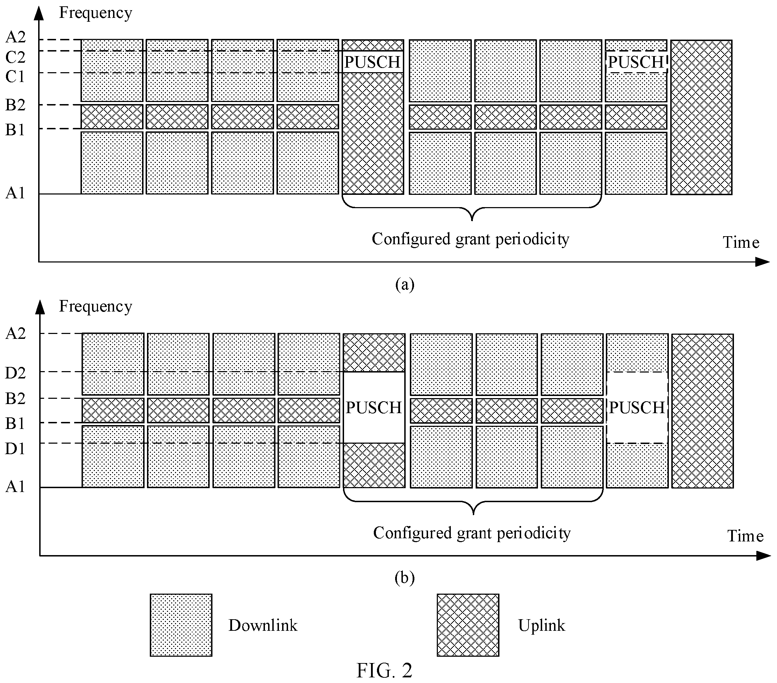

If a 1st time unit to a 4th time unit and a 6th time unit to a 9th time unit in resources on the BWP are all duplex time units, and a 5th time unit and a 10th time unit are both uplink time units, assuming that a frequency range of an activated BWP is A1 to A2, a frequency range of the uplink subband in each duplex time unit is B1 to B2. A1 < B1 < B2 < A2. As shown in (a) in FIG. 2, if a frequency range of a frequency resource of a PUSCH configured by the network device is C1 to C2, and B2 < C1 < C2, or as shown in (b) in FIG. 2, if the frequency range of the frequency resource of the PUSCH configured by the network device is D1 to D2, and D1 < B1 < B2 < D2, a frequency domain range of the PUSCH exceeds a frequency domain range of the uplink subband in the 9th time unit. As a result, the PUSCH of the terminal device in the 9th time unit is discarded.

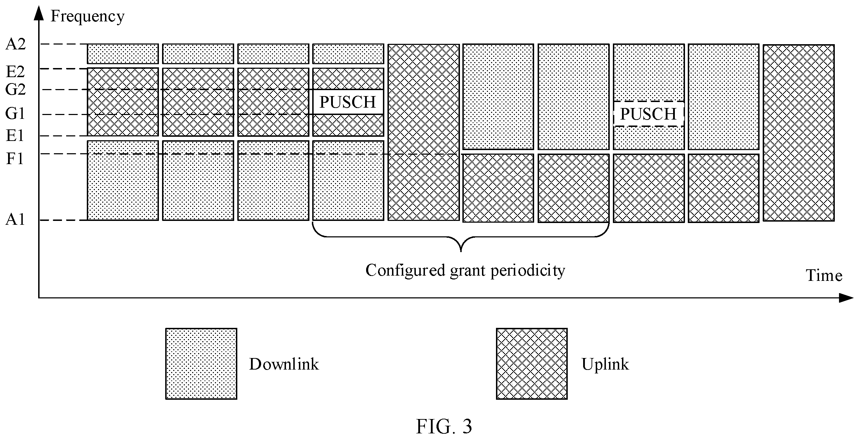

For another example, when the uplink subband is dynamically switched, a frequency domain range of a configured PUSCH may also be inconsistent with the frequency domain range of the uplink subband. As described below with reference to FIG. 3, in resources on the BWP, a 1st time unit to a 4th time unit and a 6th time unit to a 9th time unit are all duplex time units, a 5th time unit and a 10th time unit are both uplink time units, a start position of a PUSCH configured by the network device is the 5th time unit in the BWP, and a configured grant periodicity includes four time units. In this case, a PUSCH in a 2nd configured grant periodicity is located on the 9th time unit. It is assumed that a frequency range of an activated BWP is A1 to A2. A frequency range of the uplink subband in the 1st time unit to the 4th time unit is E1 to E2, a frequency range in the 6th time unit to the 9th time unit is A1 to F1, a frequency range of the PUSCH is G1 to G2, and A1 < F1 < E1 < G1 < G2 < E2 < A2. In this case, the frequency domain range of the PUSCH is not within the frequency domain range of the uplink subband in the 9th time unit. As a result, the PUSCH of the terminal device in the 9th time unit is discarded.

If a frequency range of at least a part of frequency resources of the PUSCH in a time unit used for sending the PUSCH is within the frequency range of the uplink subband, the terminal device discards a signal sent in the time unit. Consequently, an uplink resource in the duplex time unit cannot be fully utilized.

To resolve the foregoing technical problem, an embodiment of this application provides an uplink transmission method. In an uplink transmission method provided in an embodiment of this application, a network device may configure a first frequency resource set and a second frequency resource set for a terminal device. When a first time unit is an uplink time unit, the terminal device may determine a third frequency resource set based on the first frequency resource set, and send a signal on the third frequency resource set corresponding to the first time unit. When the first time unit used for transmitting the signal is a duplex time unit, the terminal device may determine a fourth frequency resource set based on the second frequency resource set, and send the signal on the fourth frequency resource set corresponding to the first time unit.

In an uplink transmission method provided in another embodiment of this application, a network device may configure a fifth frequency resource set for a terminal device. When a time unit used for transmitting a signal is a duplex time unit, the terminal device may determine a sixth frequency unit set based on the fifth frequency unit set, and send the signal on the sixth frequency unit set. A frequency range of the sixth frequency unit set is within a frequency range of an uplink subband of a second time unit, and a frequency range of at least a part of frequency units of the fifth frequency unit set is different from the frequency range of the uplink subband corresponding to the second time unit.

In an uplink transmission method provided in still another embodiment of this application, a network device may configure a seventh frequency unit set for a terminal device. When a 1st third time unit used for sending a signal in a same configured grant periodicity is a duplex time unit, the signal is sent based on an eighth frequency unit set on a plurality of third time units used for sending the signal in the grant periodicity. A frequency range of the seventh frequency unit set is outside a frequency range of an uplink subband of the 1st third time unit. The eighth frequency unit set is determined based on the seventh frequency unit set, and a frequency range of the eighth frequency unit set is within a frequency range of an uplink subband of the third time unit.

The following describes technical solutions of this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system, a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be construed as being preferred or more advantageous over another embodiment or design solution. To be precise, the term "example" is intended to present a concept in a specific manner.

In embodiments of this application, terms "information (information)", "signal (signal)", "message (message)", "channel (channel)", and "signaling (signaling)" may be interchangeably used sometimes. It should be noted that meanings expressed by the terms are consistent when differences of the terms are not emphasized. Terms "of (of)", "corresponding (corresponding, relevant)", and "corresponding (corresponding)" may be interchangeably used sometimes. It should be noted that meanings expressed by the terms are consistent when differences of the terms are not emphasized.

In embodiments of this application, sometimes a subscript such as W1 may be miswritten as a non-subscript form such as W1. Expressed meanings are consistent when differences are not emphasized. Network architectures and service scenarios described in embodiments of this application are intended to describe the technical solutions in embodiments of this application more clearly, and do not constitute a limitation on the technical solutions provided in embodiments of this application. A person of ordinary skill in the art may know that as the network architectures evolve and a new service scenario emerges, the technical solutions provided in embodiments of this application are also applicable to a similar technical problem.

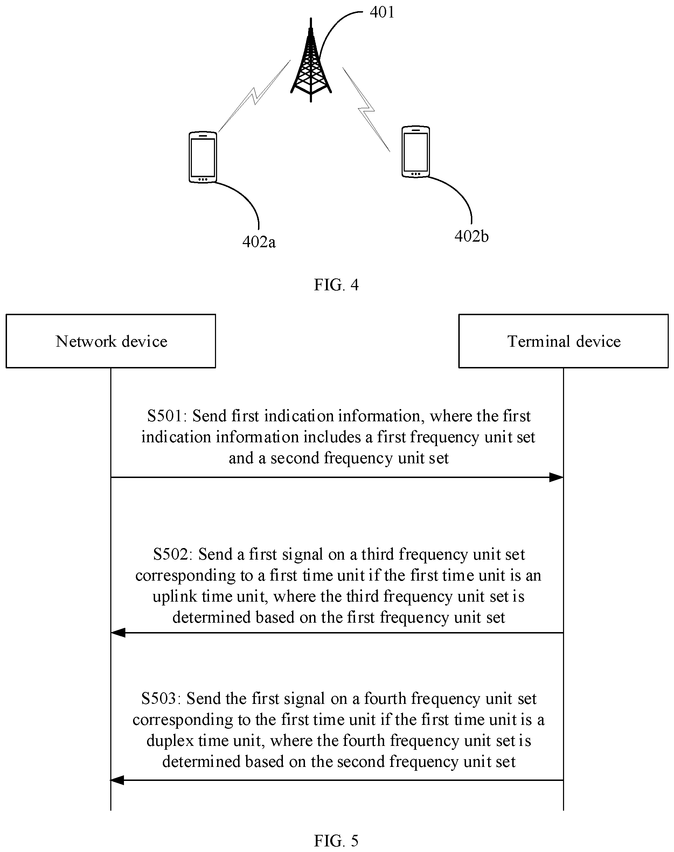

For ease of understanding of embodiments of this application, a communication system shown in FIG. 4 is first used as an example to describe in detail a communication system applicable to an embodiment of this application. For example, FIG. 4 is a diagram of an architecture of a communication system to which an uplink transmission method provided in an embodiment of this application is applicable.

As shown in FIG. 4, the communication system includes a network device 401 and at least one terminal device, for example, a terminal device 402a and/or a terminal device 402b.

The network device 401 is a device that is located on a network side of the communication system and that has a wireless transceiver function, or is a chip or a chip system that can be disposed in the device. The network device includes but is not limited to: an access point (access point, AP), for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission and reception point, TRP or transmission point, TP), or the like. The network device may alternatively be a gNB or a transmission point (TRP or TP) in a 5G system, for example, a new radio (new radio, NR) system, or one antenna panel or a group of antenna panels (including a plurality of antenna panels) of a base station in the 5G system. The network device may alternatively be a network node, for example, a baseband unit (BBU) or a distributed unit (distributed unit, DU), that constitutes a gNB or a transmission point, a road side unit (road side unit, RSU) having a base station function, or the like.

The terminal device is a terminal that accesses the communication system and that has a wireless transceiver function, or a chip or a chip system that can be disposed in the terminal. The terminal device may also be referred to as an access terminal, a subscriber unit, a subscriber station, a mobile station, a mobile console, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU with a terminal function, or the like. The terminal device in this application may alternatively be a vehicle-mounted module, a vehicle-mounted assembly, a vehicle-mounted component, a vehicle-mounted chip, or a vehicle-mounted unit built in a vehicle as one or more components or units. The vehicle uses the vehicle-mounted module, the vehicle-mounted assembly, the vehicle-mounted component, the vehicle-mounted chip, or the vehicle-mounted unit built in the vehicle, to implement the uplink transmission method provided in this application.

It should be noted that the uplink transmission method provided in embodiments of this application is applicable to communication between any two nodes shown in FIG. 4, for example, between terminal devices, between network devices, and between the terminal device and the network device. For a specific implementation, refer to the following method embodiments. Details are not described herein.

It should be noted that the solutions in embodiments of this application may be further applied in another communication system, and a corresponding name may also be replaced with a name of a corresponding function in the another communication system.

It should be understood that FIG. 4 is merely a simplified diagram used as an example for ease of understanding. The communication system may further include another network device and/or another terminal device, not drawn in FIG. 4.

The following describes in detail the uplink transmission method provided in embodiments of this application with reference to FIG. 5 to FIG. 11.

In an embodiment, a resource configured by a network device for a terminal device may include a duplex time unit and an uplink time unit. In this case, the network device may configure two frequency unit sets for the terminal device. One frequency unit is used by the terminal device to send a signal in the duplex time unit, and the other frequency unit set may be used by the terminal device to send the signal in the uplink time unit.

For example, FIG. 5 is a schematic flowchart of an uplink transmission method according to an embodiment of this application. The uplink transmission method may be applied to communication between the network device and the terminal device shown in FIG. 4.

As shown in FIG. 5, the uplink transmission method includes the following steps.

S501: The network device sends first indication information. Correspondingly, the terminal device receives the first indication information.

The first indication information indicates a first frequency unit set and a second frequency unit set.

One frequency unit set includes one or more frequency units. For example, the first frequency unit set may include one or more frequency units, for example, a resource block or a physical resource block. The second frequency unit set may include one or more frequency units, for example, a resource block or a physical resource block.

For example, a frequency range of the first frequency unit set is within a frequency range of an activated BWP of the terminal device, and a frequency range of the second frequency unit set is within a frequency range of an uplink subband of a duplex time unit.

In a possible design solution, the first indication information may be carried in RRC signaling, or the first indication information may be carried in DCI.

In a possible design solution, the first indication information may include first sub-indication information and second sub-indication information, the first sub-indication information indicates the first frequency unit set, and the second sub-indication information indicates the second frequency unit set.

Optionally, the first sub-indication information may be carried in the radio resource control RRC signaling, and the second sub-indication information may be carried in the downlink control information DCI. Alternatively, optionally, the first sub-indication information may be carried in the DCI, and the second sub-indication information may be carried in the RRC signaling.

In this way, two frequency resource sets may be simultaneously indicated without increasing DCI signaling overheads.

It should be noted that both the first sub-indication information and the second sub-indication information may be carried in the DCI. The first sub-indication information and the second sub-indication information may be carried in same DCI, or may be carried in different DCI. Alternatively, both the first sub-indication information and the second sub-indication information may be carried in the RRC signaling. The first sub-indication information and the second sub-indication information may be carried in same RRC signaling, or may be carried in different RRC signaling.

In a possible design solution, the first indication information may further indicate one or more of the following corresponding to a first time unit: a modulation and coding scheme (modulation and coding scheme, MCS), a frequency hopping interval, or precoding and a quantity of layers.

The first time unit is a time unit used for sending a first signal, and the first time unit may be determined based on a configured grant periodicity and a configured grant start time unit. The network device may receive the first signal in the first time unit.

The following uses an example in which a PUSCH is configured in one time unit in each configured grant periodicity. It is assumed that the configured grant periodicity includes four time units, and a start time unit of the configured granted PUSCH is a $2^{nd}$ time unit. In this case, a $(4n+2)^{th}$ time unit is the first time unit, where n is greater than or equal to 0, and n is an integer. In the solution of configuring a PUSCH in a plurality of time units in one configured grant periodicity, for a manner of determining the first time unit, refer to an implementation principle of configuring a PUSCH in one time unit in one configured grant periodicity. Details are not described herein again.

S502: The terminal device sends the first signal on a third frequency unit set corresponding to the first time unit if a type of the first time unit is an uplink time unit. Correspondingly, the network device receives the first signal on the third frequency unit set corresponding to the first time unit.

The third frequency unit set is a frequency unit set determined based on the first frequency unit set.

A frequency range of the third frequency unit set is within the frequency range of the activated BWP of the terminal device.

In a possible design solution, the third frequency unit set may be the first frequency unit set. Alternatively, the third frequency unit set may be a frequency unit set determined based on the first frequency unit set and a frequency hopping pattern.

For example, when the terminal device does not perform frequency hopping, the third frequency unit set may be the first frequency unit set. When the terminal device performs frequency hopping, the third frequency unit set may be a frequency unit set determined based on the first frequency unit set and a frequency hopping pattern. For an implementation principle of frequency hopping, refer to an implementation principle of an existing frequency hopping technology. Details are not described herein again. In this way, the third frequency unit set is determined based on the first frequency unit set and the frequency hopping pattern, so that the third frequency unit set can change with the frequency hopping pattern, thereby obtaining a frequency diversity gain and improving a communication rate and reliability.

It may be understood that, in S502, the first signal may be carried on a configured grant first PUSCH. Sending the first signal may be understood as sending the first PUSCH, where the first PUSCH carries the first signal.

S503: The terminal device sends the first signal on a fourth frequency unit set corresponding to the first time unit if the type of the first time unit is a duplex time unit. Correspondingly, the network device receives the first signal on the fourth frequency unit set corresponding to the first time unit.

The fourth frequency unit set is a frequency unit set determined based on the second frequency unit set, and a frequency range of the fourth frequency unit set is within a frequency range of an uplink subband of the first time unit.

In a possible design solution, the fourth frequency unit set may be the second frequency unit set. Alternatively, the fourth frequency unit set may be a frequency unit set determined based on the second frequency unit set and a frequency hopping pattern.

For example, when the terminal device does not perform frequency hopping, the fourth frequency unit set may be the second frequency unit set. When the terminal device performs frequency hopping, the fourth frequency unit set may be a frequency unit set determined based on the second frequency unit set and a frequency hopping pattern. For an implementation principle of frequency hopping, refer to an implementation principle of an existing frequency hopping technology. Details are not described herein again.

In this way, the fourth frequency unit set is determined based on the second frequency unit set and the frequency hopping pattern, so that the fourth frequency unit set can change with the frequency hopping pattern, thereby obtaining a frequency diversity gain and improving a communication rate and reliability.

In the case of S502, a time domain resource of the first PUSCH is the first time unit, and a frequency domain resource is the third frequency unit set. In the case of S503, the time domain resource of the first PUSCH is the first time unit, and the frequency domain resource is the fourth frequency unit set.

In this embodiment of this application, if the first time unit is a downlink time unit, the first signal sent in the first time unit may be discarded. In other words, in this case, there is no first PUSCH in the first time unit.

For ease of understanding, the solution shown in FIG. 5 is described below by using an example with reference to a case of no frequency hopping.

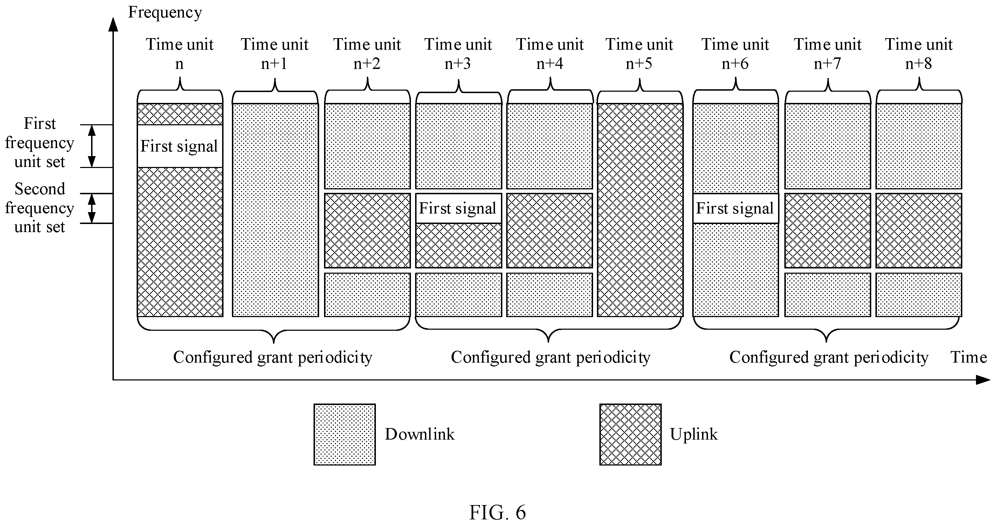

As shown in FIG. 6, in a BWP of the terminal device, the time unit includes a time unit n to a time unit n+8. The time unit n and a time unit n+5 are uplink time units. A time unit n+2 to a time unit n+4, a time unit n+7, and the time unit n+8 are all duplex time units. A time unit n+1 and a time unit n+6 are downlink time units. One configured grant periodicity includes three time units. Assuming that a configured grant start time unit is the time unit n, it may be determined that the first time unit includes the time unit n, a time unit n+3, and the time unit n+6. If the first time unit is the time unit n, the third frequency unit set may be determined based on the first frequency unit set, and the first signal is sent on a third frequency unit set on the time unit n. If the first time unit is the time unit n+3, the fourth frequency unit set may be determined based on the second frequency unit set, and the first signal is sent on the fourth frequency unit set in the time unit n+3. If the first time unit is the time unit n+6, the first signal that needs to be sent in the time unit n+6 may be discarded.

It should be noted that a principle of sending the first signal in the first time unit in a case of frequency hopping is similar to that in a case of no frequency hopping. A difference lies in that the third frequency unit set is a frequency unit set determined based on the first frequency unit set and the frequency hopping pattern, and the fourth frequency unit set is a frequency unit set determined based on the second frequency unit set.

Based on the uplink transmission method provided in FIG. 5, the terminal device may receive the first indication information from the network device. When the first time unit is the uplink time unit, the terminal device sends the first signal based on the third frequency unit set determined based on the first frequency unit set indicated by the first indication information. When the first time unit is the duplex time unit, the terminal device sends the first signal based on the fourth frequency unit set determined based on the second frequency unit set indicated by the first indication information. The frequency range of the fourth frequency unit is within the frequency range of the uplink subband of the first time unit. The first time unit is a time unit used for sending the first signal. In this way, a frequency unit set used for sending the first signal may be matched based on different types of first time units, so that the terminal device sends the first signal to the network device on the uplink subband of the first time unit. In a subband full-duplex scenario, uplink resources of the duplex time unit and the uplink time unit can be fully used, thereby improving uplink coverage performance and reducing a communication delay.

In addition, when the configured grant periodicity is inconsistent with a slot configuration periodicity, resource utilization can also be improved, so that flexibility of uplink transmission can be considered.

In a possible design solution, the method provided in FIG. 5 may further include step 5-1.

Step 5-1: The network device sends second indication information, and correspondingly, the terminal device receives the second indication information.

The second indication information indicates a plurality of candidate frequency unit sets. The first frequency unit set is one of the plurality of candidate frequency unit sets, and/or the second frequency unit set is one of the plurality of candidate frequency unit sets.

In other words, the second indication information may indicate a plurality of candidate frequency unit sets, and then the network device may select the first frequency unit set and/or the second frequency unit set from the plurality of candidate frequency unit sets based on the first indication information.

In this way, a frequency unit set used for sending the first signal can be dynamically and flexibly switched based on a position of the uplink subband, so that an uplink resource of the duplex time unit is fully used, thereby further improving uplink coverage performance.

The second indication information may be carried in radio resource control signaling.

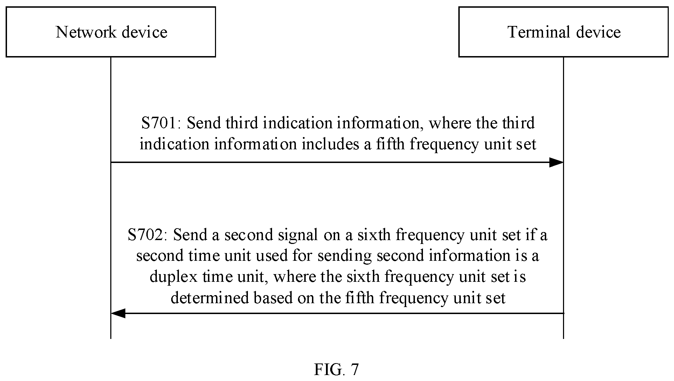

In the uplink transmission method shown in FIG. 5, two frequency unit sets need to be configured. To reduce resource overheads, in some other embodiments, a resource configured by the network device for the terminal device may include a duplex time unit, and uplink subbands on at least two duplex time units are different. In this case, the network device may configure a fifth frequency unit set for the terminal device, and the terminal device may determine, based on the fifth frequency unit set configured by the network device, a sixth frequency unit set on a time unit used for sending a signal, to send the signal. The following provides description with reference to FIG. 7.

FIG. 7 is a schematic flowchart 2 of an uplink transmission method according to an embodiment of this application. As shown in FIG. 7, the uplink transmission method includes the following steps.

S701: A network device sends third indication information. Correspondingly, a terminal device receives the third indication information.

The third indication information indicates a fifth frequency unit set. The fifth frequency unit set corresponds to a second time unit used for sending a second signal. In other words, a frequency unit set used for sending the second signal in the second time unit is related to the fifth frequency unit set.

The second time unit may be determined based on a configured grant periodicity and a configured grant start time unit. In other words, the second time unit is a time unit that is determined based on the configured grant periodicity and the configured grant start time unit and that is used for sending the second signal. For a manner of determining the second time unit, refer to the foregoing determining principle of the first time unit. Details are not described herein again.

S702: The terminal device sends the second signal on a sixth frequency unit set corresponding to the second time unit if the second time unit used for sending the second signal is a duplex time unit. Correspondingly, the network device receives the second signal on the sixth frequency unit set corresponding to the second time unit.

A frequency range of at least a part of frequency units of the fifth frequency unit set is different from a frequency range of an uplink subband corresponding to the second time unit. The sixth frequency unit set is a frequency unit set determined based on the fifth frequency unit set, and a frequency range of the sixth frequency unit set is within the frequency range of the uplink subband of the second time unit.

In other words, if the second time unit used for sending the second signal is the duplex time unit, and the frequency range of at least a part of frequency units of the fifth frequency unit set is different from the frequency range of the uplink subband corresponding to the second time unit, the terminal device sends the second signal on the sixth frequency unit set corresponding to the second time unit. Correspondingly, the network device receives the second signal on the sixth frequency unit set corresponding to the second time unit.

In a possible design solution, the sixth frequency unit set may be a frequency unit set determined based on the fifth frequency unit set. Alternatively, the sixth frequency unit set may be a frequency unit set determined based on the fifth frequency unit set and a frequency hopping pattern. For a principle of determining the sixth frequency unit set, refer to related descriptions of the fourth frequency unit set. Details are not described herein again. In this way, the sixth frequency unit set is determined based on the fifth frequency unit set and the frequency hopping pattern, so that the sixth frequency unit set can change with the frequency hopping pattern, thereby obtaining a frequency diversity gain and improving a communication rate and reliability.

It may be understood that one frequency unit set includes one or more frequency units. For example, the fifth frequency unit set includes one or more frequency units, and the sixth frequency unit set includes one or more frequency unit sets.

In a possible design solution, the second signal may be carried on a configured grant second PUSCH. Sending the second signal may be understood as sending the second PUSCH, where the second PUSCH carries the second signal. A time domain resource of the second PUSCH is the first time unit, and a frequency domain resource of the second PUSCH is the sixth frequency unit set.

The following further describes a start frequency unit and a quantity of frequency units in the sixth frequency unit set with reference to a specific case. A quantity of frequency units between a start frequency and an end frequency of the fifth frequency unit set is a first quantity, and a quantity of frequency units between a start frequency and an end frequency of the sixth frequency unit set is a second quantity.

The following first describes the second quantity.

In a possible design solution, the second quantity may be determined based on one or more of the following: a quantity of frequency units in the fifth frequency unit set, a first scaling parameter, a second scaling parameter, or a quantity of frequency units in the uplink subband corresponding to the second time unit. It may be understood that the second quantity is less than or equal to the quantity of frequency units in the uplink subband corresponding to the second time unit.

In this way, the quantity of frequency units between the start frequency and the end frequency of the sixth frequency unit set may be determined based on different parameters, thereby improving flexibility of the quantity of frequency units between the start frequency and the end frequency of the sixth frequency unit set.

The second quantity is further described below with reference to different cases.

When a resource allocation type 1 is used as a resource allocation type, the second quantity is shown in the following cases 1-1 to 1-4.

Case 1-1: The second quantity may be determined based on the first quantity and the first scaling parameter.

For example, the second quantity may satisfy a relationship shown in the following formula (1):

$$L_{PUSCH,2} = \left\lceil L_{PUSCH,1} \times \beta \right\rceil \qquad (1)$$

$L_{PUSCH,2}$ is the second quantity, $L_{PUSCH,1}$ is the first quantity, $\beta$ is the first scaling parameter, $0 < \beta < 1$, and [ ] is a rounding operation.

It may be understood that, in this embodiment of this application, unless otherwise specified, the rounding operation may be rounding down, rounding up, or rounding off.

The first scaling parameter $\beta$ may satisfy a relationship shown in the following formula (2):

$$\beta = N_{UL\ subband}^{size} / N_{BWP}^{size} \qquad (2)$$

Alternatively, $\beta$ may be semi-persistently configured through RRC signaling. For example, the first scaling parameter $\beta$ may be carried in a "configured grant configuration information element (ConfiguredGrantConfig IE)" field of the RRC signaling.

Alternatively, the network device may semi-persistently configure a first scaling parameter set through the RRC signaling, and then indicate the first scaling parameter from the first scaling parameter set through DCI. For example, the network device may configure the first scaling parameter set {0.1,0.2, ... ,0.9} (corresponding indexes are sequentially 0 to 9) through the RRC signaling, and indicate, through the DCI, that an index of the first scaling parameter is "1", and the first scaling parameter is 0.2.

Alternatively, the first scaling parameter may be preconfigured in the terminal device. For example, the first scaling parameter may be 0.1, 0.2, or 0.3.

It may be understood that a value range of the first scaling parameter is $0 < \beta < 1$.

Case 1-2: The second quantity may be equal to the quantity of frequency units in the uplink subband corresponding to the second time unit. In other words, the sixth frequency unit set occupies an entire uplink subband corresponding to the second time unit.

Case 1-3: If the first quantity is less than or equal to the quantity of frequency units in the uplink subband, the second quantity may be equal to the first quantity.

Case 1-4: The second quantity may be determined based on the second scaling parameter and the quantity of frequency units in the uplink subband corresponding to the second time unit.

For example, the quantity of frequency units between the start frequency and the end frequency of the sixth frequency unit set may satisfy a relationship shown in the following formula (3):

$$L_{PUSCH,2} = N_{UL\ subband}^{size}/\gamma \qquad (3)$$

$L_{PUSCH,2}$ is the second quantity, $N_{UL\ subband}^{size}$ is the quantity of frequency units in the uplink subband corresponding to the second time unit, $\gamma$ is the second scaling parameter, and $\gamma > 1$. For example, $\gamma = 2$, or $\gamma = 3$, or $\gamma = 4$.

It may be understood that the foregoing cases 1-1 to 1-4 may be applied to the resource allocation type 1. In addition, a sixth frequency offset resource set corresponding to case 1-1, case 1-3, and case 1-4 may be a frequency resource set obtained by performing frequency hopping on a fifth frequency resource set. The quantity of frequency units in the sixth frequency unit set remains unchanged before and after frequency hopping.

In the foregoing cases 1-1 to 1-4, for the resource allocation type 1, the first quantity is the quantity of frequency units in the fifth frequency unit set, and the second quantity is the quantity of frequency units in the sixth frequency unit set.

In addition, when a resource allocation type 0 is used as the resource allocation type and frequency domain positions of the frequency units in the sixth frequency unit set are contiguous, the second quantity is shown in the following cases 1-5 to 1-7.

Case 1-5: If the first quantity is less than or equal to the quantity of frequency units in the uplink subband corresponding to the second time unit, the second quantity may be equal to the quantity of frequency units in the fifth frequency unit set.

The quantity of frequency units in the fifth frequency unit set may be determined based on a field indicating the fifth frequency unit set, for example, a bitmap (bitmap), and each bit corresponds to one frequency unit. For example, a field indicating the fifth frequency unit set is "1101001". If a bit "1" indicates that a frequency unit set corresponding to the bit is a frequency unit in the fifth frequency unit set, the quantity of frequency units in the fifth frequency unit set is 4. In this case, the second quantity is 4.

Case 1-6: If the first quantity is greater than the quantity of frequency units in the uplink subband corresponding to the second time unit, and the quantity of frequency units in the fifth frequency unit set is less than or equal to the quantity of frequency units in the uplink subband corresponding to the second time unit, the second quantity may be equal to the quantity of frequency units in the fifth frequency unit set.

Case 1-7: If the first quantity is greater than the quantity of frequency units in the uplink subband corresponding to the second time unit, and the quantity of frequency units in the fifth frequency unit is greater than the quantity of frequency units in the uplink subband corresponding to the second time unit, the second quantity may be less than or equal to the quantity of frequency units in the uplink subband corresponding to the second time unit.

For example, the quantity of frequency units in the sixth frequency unit set is $[M \times \delta]$, and $[M \times \delta] \leq N$. M is a quantity of frequency units in a first frequency unit set, N is the quantity of frequency units in the uplink subband corresponding to the second time unit, and $\delta$ is a fourth scaling parameter. The fourth scaling parameter may satisfy a relationship shown in the following formula (4):

$$\delta = N_{UL\ subband}^{size}/N_{BWP}^{size} \qquad (4)$$

Alternatively, $\delta$ may be semi-persistently configured through RRC signaling. For example, the fourth scaling parameter $\delta$ may be carried in a "configured grant configuration information element (ConfiguredGrantConfig IE)" field of the RRC signaling.

Alternatively, the network device may semi-persistently configure a fourth scaling parameter set through the RRC signaling, and then indicate the first scaling parameter from the first scaling parameter set through DCI. For example, the network device may configure the fourth scaling parameter set {0.1,0.2, ... ,0.9} (corresponding indexes are sequentially 0 to 9) through the RRC signaling, and indicate, through the DCI, that an index of the fourth scaling parameter is "1", and the fourth scaling parameter is 0.2.

Alternatively, the fourth scaling parameter may be preconfigured in the terminal device. For example, the fourth scaling parameter may be 0.1, 0.2, or 0.3.

It may be understood that a value range of the fourth scaling parameter is $0 < \delta < 1$.

In the foregoing cases 1-5 to 1-7, if the frequency units in the sixth frequency unit set are contiguous, the quantity of frequency units in the sixth frequency unit set is the second quantity. If the frequency units in the sixth frequency unit set are not contiguous, the quantity of frequency units in the sixth frequency unit set is less than the second quantity.

It may be understood that the second quantity may be preconfigured in the terminal device. The second quantity may be the same as the second quantity determined in the foregoing cases 1-1 to 1-7, or the second quantity may be another quantity less than the quantity of frequency units in the uplink subband corresponding to the second time unit.

The following further describes the start frequency unit of the sixth frequency unit.

In a possible design solution, the start frequency unit of the sixth frequency unit set is determined based on one or more of the following: a start frequency unit of the fifth frequency unit set, the quantity of frequency units in the uplink subband corresponding to the second time unit, a start frequency unit of the uplink subband corresponding to the second time unit, a third scaling parameter, or the quantity of frequency units between the start frequency and the end frequency of the sixth frequency unit set.

The following provides further description with reference to cases 2-1 to 2-5.

Case 2-1: The start frequency unit of the sixth frequency unit set may be determined based on a result of a modulo operation of an index of the start frequency unit of the fifth frequency unit set on the quantity of frequency units in the uplink subband corresponding to the second time unit.

For example, if the frequency unit is a resource block, the start frequency unit of the sixth frequency unit set may satisfy a relationship shown in the following formula (5) or formula (6):

$$RB_{PUSCH}^{start,2} = RB_{PUSCH}^{start,1} \bmod N_{UL\ subband}^{size,RB} \qquad (5)$$

$$RB_{PUSCH}^{start,2} = RB_{PUSCH}^{start,1} \bmod N_{UL\ subband}^{size,RB} + RB_{UL\ Subband}^{start} \qquad (6)$$

Alternatively, if the frequency unit is a resource block group, the start frequency unit of the sixth frequency unit set satisfies a relationship shown in the following formula (7) or formula (8):

$$RBG_{PUSCH}^{start,2} = RBG_{PUSCH}^{start,1} \bmod N_{UL\ subband}^{size,RBG} \qquad (7)$$

$$RBG_{PUSCH}^{start,2} = RBG_{PUSCH}^{start,1} \bmod N_{UL\ subband}^{size,RBG} + RBG_{UL\ Subband}^{start} \qquad (8)$$

$RB_{PUSCH}^{start,2}$ is an index of a start resource block of the sixth frequency unit set, $RB_{PUSCH}^{start,1}$ is an index of a start resource block of the fifth frequency unit set, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $RBG_{PUSCH}^{start,1}$ is an index of a start resource block group of the fifth frequency unit set, $RBG_{UL\ Subband}^{start}$ is an index of a start resource block group of the uplink subband, and mod is a modulo operation.

It may be understood that the RB in this embodiment of this application may be a PRB.

Case 2-2: The start frequency unit of the sixth frequency unit set may be determined based on the start frequency unit of the fifth frequency unit set and the third scaling parameter.

For example, if the frequency unit is a resource block, the start frequency unit of the sixth frequency unit set may satisfy a relationship shown in the following formula (9) or formula (10):

$$RB_{PUSCH}^{start,2} = \left[ RB_{PUSCH}^{start,1} \times \alpha \right] \qquad (9)$$

$$RB_{PUSCH}^{start,2} = \left[ RB_{PUSCH}^{start,1} \times \alpha \right] + RB_{UL\ Subband}^{start} \qquad (10)$$

Alternatively, if the frequency unit is a resource block group, the start frequency unit of the sixth frequency unit set satisfies a relationship shown in the following formula (11) or formula (12):

$$RBG_{PUSCH}^{start,2} = \left[ RBG_{PUSCH}^{start,1} \times \alpha \right] \qquad (11)$$

$$RBG_{PUSCH}^{start,2} = \left[ RBG_{PUSCH}^{start,1} \times \alpha \right] + RBG_{UL\ Subband}^{start} \qquad (12)$$

$\alpha$ is the third scaling parameter, and $0 < \alpha < 1$.

Case 2-3: The start frequency unit of the sixth frequency unit set may be the start frequency unit of the uplink subband corresponding to the second time unit.

Case 2-4: If the fifth frequency unit set is located in the uplink subband, the start frequency unit of the sixth frequency unit set may be the start frequency unit of the fifth frequency unit set.

Case 2-5: If the frequency unit is a resource block, the start frequency unit of the sixth frequency unit set may satisfy a relationship shown in the following formula (13) or formula (14):

$$RB_{PUSCH}^{start,2} = N_{UL\ subband}^{size,RB} - L_{PUSCH,2}^{RB} + RB_{UL\ Subband}^{start} \qquad (13)$$

$$RB_{PUSCH}^{start,2} = [(N_{UL\ subband}^{size,RB} - L_{PUSCH,2}^{RB})/2] + RB_{UL\ Subband}^{start} \qquad (14)$$

Alternatively, if the frequency unit is a resource block group, the start frequency unit of the sixth frequency unit set satisfies a relationship shown in the following formula (15):

$$RBG_{PUSCH}^{start,2} = N_{UL\ subband}^{size,RBG} - L_{PUSCH,2}^{RBG} + RBG_{UL\ Subband}^{start} \qquad (15)$$

Alternatively, if the frequency unit is a resource block group, the start frequency unit of the sixth frequency unit set satisfies a relationship shown in the following formula (16):

$$RBG_{PUSCH}^{start,2} = [(N_{UL\ subband}^{size,RBG} - L_{PUSCH,2}^{RBG})/2] + RBG_{UL\ Subband}^{start} \qquad (16)$$

$L_{PUSCH,2}^{RB}$ is a second quantity measured in resource blocks, and $L_{PUSCH,2}^{RBG}$ is a second quantity measured in resource block groups. It may be understood that the start frequency unit of the sixth frequency unit set may be preset.

For example, the start frequency unit of the sixth frequency unit set may be the same as the start frequency unit of the sixth frequency unit set determined in the foregoing cases 2-1 to 2-5.

It should be noted that if the second time unit is the duplex time unit, and the frequency range of at least a part of frequency units of the fifth frequency unit set is within the frequency range of the uplink subband of the second time unit, the terminal device may send the second signal on the fifth frequency unit set on the second time unit or send the second signal on a frequency unit set obtained by performing frequency hopping on the fifth frequency unit set.

If the second time unit is a downlink time unit, the second signal sent in the second time unit may be discarded. In other words, in this case, there is no second PUSCH in the second time unit.

For ease of understanding, the following describes the solution shown in FIG. 7 with reference to a specific example.

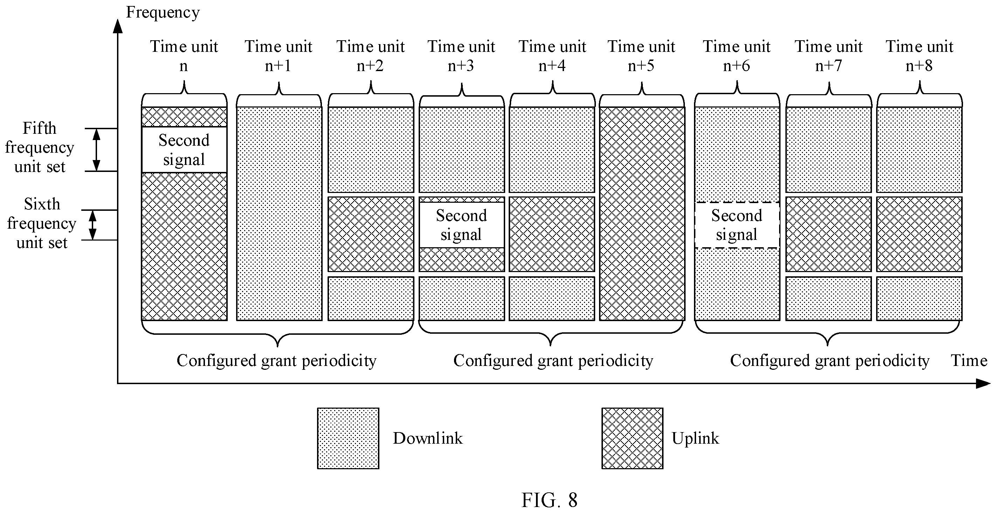

As shown in FIG. 8, in a BWP of the terminal device, the time unit includes a time unit n to a time unit n+8. The time unit n and a time unit n+5 are uplink time units. A time unit n+2 to a time unit n+4, a time unit n+7, and the time unit n+8 are all duplex time units. A time unit n+1 and a time unit n+6 are downlink time units. A configured grant periodicity includes three time units. Assuming that a configured grant start time unit is the time unit n, it may be determined that the second time unit includes the time unit n, a time unit n+3, and the time unit n+6. The terminal device may send the second signal on a fifth frequency unit set on the time unit n if the second time unit is the time unit n. If the second time unit is the time unit n+3, the terminal device may determine the sixth frequency unit set based on the fifth frequency unit set, and send the second signal on a fourth frequency unit set of the time unit n+3. If the second time unit is the time unit n+6, the second signal that needs to be sent in the time unit n+6 may be discarded.

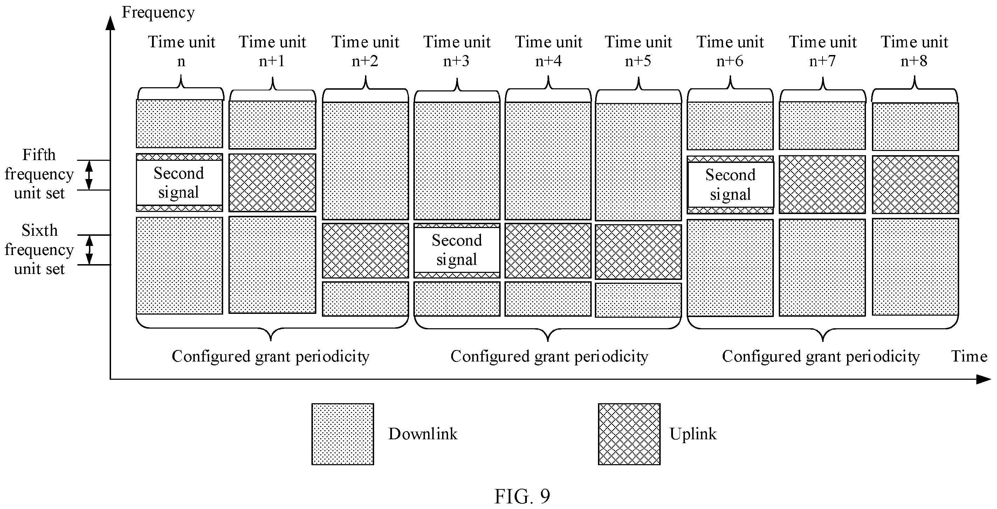

As shown in FIG. 9, in a BWP of the terminal device, the time unit includes a time unit n to a time unit n+8. The time unit n to the time unit n+8 are all duplex time units. Uplink subbands corresponding to the time unit n, a time unit n+1, and a time unit n+6 to the time unit n+8 have consistent frequency ranges, and uplink subbands corresponding to a time unit n+2 to a time unit n+5 have consistent frequency ranges. A configured grant periodicity includes three time units. Assuming that a configured grant start time unit is the time unit n, it may be determined that the second time unit includes the time unit n, a time unit n+3, and the time unit n+6. The terminal device may send the second signal on a fifth frequency unit set on the time unit n if the second time unit is the time unit n. If the second time unit is the time unit n+3, a frequency range of at least a part of frequency units of the fifth frequency unit set is different from a frequency range of an uplink subband corresponding to the time unit n+3. In this case, the terminal device may determine the sixth frequency unit set based on the fifth frequency unit set, and send the second signal on a sixth frequency unit set of the time unit n+3. If the second time unit is the time unit n+6, the second signal may be sent on a fifth frequency unit set of the time unit n+6.

Based on the uplink transmission method shown in FIG. 7, the terminal device may receive the third indication information from the network device, to obtain the fifth frequency unit set. When the time unit used for sending the second signal is the duplex time unit, the terminal device sends the second signal to the network device based on the sixth frequency unit set corresponding to the second time unit. The sixth frequency unit set is a frequency unit set determined based on the fifth frequency unit set, a frequency range of the sixth frequency unit set is within a range of the uplink subband of the second time unit, and a frequency range of at least a part of frequency units of the fifth frequency unit set is different from the frequency range of the uplink subband corresponding to the second time unit. In this way, the terminal device can send the second signal to the network device on the uplink subband of the second time unit. In a subband full-duplex scenario, uplink resources of the duplex time unit and the uplink time unit can be fully used, thereby improving uplink coverage performance and reducing a communication delay.

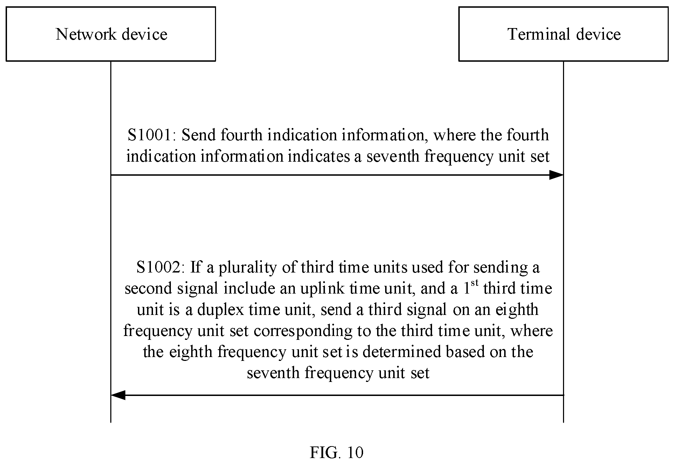

In addition, a signal may be repeatedly transmitted on different time units in a same configured grant periodicity, and there is an uplink time unit and a duplex time unit in a resource configuration periodicity. In one configured grant periodicity, a time unit used for transmitting a signal includes an uplink time unit, and a 1st time unit used for sending the signal in the configured grant periodicity is a duplex time unit. In this case, a frequency unit set configured by the network device for the terminal device may include a seventh frequency unit set corresponding to the duplex time unit. In this way, the terminal device may determine an eighth frequency unit set based on the seventh frequency unit set, and send the signal on the eighth frequency unit set on the uplink time unit used for sending the signal. The following provides further description with reference to FIG. 10.

FIG. 10 is a schematic flowchart 3 of an uplink transmission method according to an embodiment of this application. As shown in FIG. 10, the uplink transmission method provided in this embodiment of this application includes the following steps.

S1001: A network device sends fourth indication information. Correspondingly, a terminal device receives the fourth indication information.

The fourth indication information indicates a seventh frequency unit set. The seventh frequency unit set corresponds to a plurality of third time units, and a frequency range of the seventh frequency unit set is outside a frequency range of an uplink subband of a 1st third time unit.

S1002: If the plurality of third time units used for transmitting a third signal include an uplink time unit, and the 1st third time unit is a duplex time unit, the terminal device sends the third signal on an eighth frequency unit set corresponding to each of the plurality of third time units.

For a principle of determining the third time unit, refer to related descriptions of the first time unit or the second time unit. Details are not described herein again.

The third time unit is a time unit used for sending the third signal in one configured grant periodicity, and there are a plurality of third time units. The frequency range of the seventh frequency unit set is outside the frequency range of the uplink subband of the 1st third time unit. The eighth frequency unit set corresponding to the third time unit is determined based on the seventh frequency unit set, and a frequency range of the eighth frequency unit set corresponding to one third time unit is within the frequency range of the uplink subband of the third time unit. One frequency unit set includes one or more frequency units.

The third time unit may be determined based on a configured grant periodicity and a configured grant start time unit. In other words, the third time unit is a time unit that is determined based on the configured grant periodicity and the configured grant start time unit and that is used for sending the third signal. For a manner of determining the third time unit, refer to the foregoing determining principle of the first time unit. Details are not described herein again.

In a possible design solution, the third signal may be carried on a configured grant third PUSCH. Sending the third signal may be understood as sending the third PUSCH, where the third PUSCH carries the third signal.

The third time unit may be a time unit determined based on the configured grant periodicity and the configured grant start time unit.

In a possible design solution, the eighth frequency unit set may be a frequency unit set determined based on the seventh frequency unit set. Alternatively, the eighth frequency unit set may be a frequency unit set determined based on the seventh frequency unit set and a frequency hopping pattern. For a principle of determining the eighth frequency unit set, refer to related descriptions of the third frequency unit set, the fourth frequency unit set, or the sixth frequency unit set. Details are not described herein again. In this way, the eighth frequency unit set is determined based on the seventh frequency unit set and the frequency hopping pattern, so that the eighth frequency unit set can change with the frequency hopping pattern, thereby obtaining a frequency diversity gain and improving a communication rate and reliability.

For ease of understanding, the following describes S1002 with reference to a specific example.

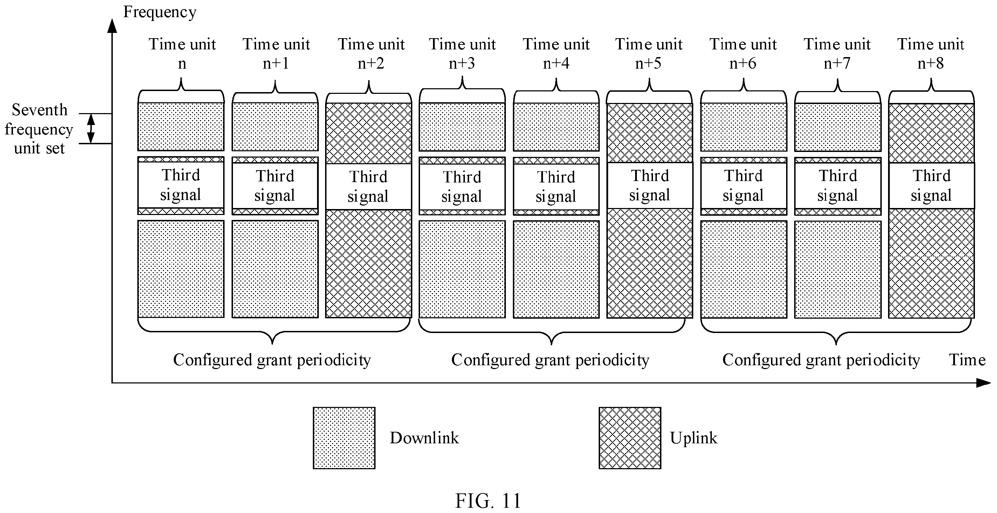

As shown in FIG. 11, in a BWP of the terminal device, the time unit includes a time unit n to a time unit n+8. The time unit n, a time unit n+1, a time unit n+3, a time unit n+4, a time unit n+6, and a time unit n+7 are all duplex time units. A time unit n+2, a time unit n+5, and the time unit n+8 are uplink time units. If a configured grant periodicity includes three slots, and a quantity of repetitions for the third signal is 3, the third time unit includes the time unit n to the time unit n+8. If a time unit in which the third signal is sent for a 1st time is the time unit n, the 1st third time unit is the time unit n, the time unit n+3, or the time unit n+6. A 1st configured grant periodicity (from left to right) is used as an example. If the third time unit is the time unit n, the terminal device may send the third signal on an eighth frequency resource set corresponding to the time unit n. If the third time unit is the time unit n+1, the terminal device may send the third signal on an eighth frequency resource set corresponding to the time unit n+1. If the third time unit is the time unit n+2, the terminal device may send the third signal on an eighth frequency resource set corresponding to the time unit n+2. Principles of a 2nd configured grant periodicity and a 3rd configured grant periodicity are similar to that of the 1st grant periodicity. Details are not described herein again.

Based on the uplink transmission method provided in FIG. 10, the terminal device may receive the fourth indication information from the network device. When the third time unit includes the uplink time unit, and the 1st third time unit is the duplex time unit, the terminal device sends the third signal to the network device on the eighth frequency resource set of the third time unit. The fourth indication information indicates the seventh frequency unit set, the frequency range of the seventh frequency unit set is outside the frequency range of the uplink subband of the 1st third time unit, and the eighth frequency unit set is determined based on the seventh frequency unit set. In this way, a frequency unit set matching an uplink subband corresponding to the uplink time unit is configured, so that a frequency resource that is on the third time unit and that is used by the terminal device to send the third signal to the network device can be within a range of the uplink subband of the third time unit. In a subband full-duplex scenario, uplink resources of the duplex time unit and the uplink time unit can be fully used, thereby improving uplink coverage performance and reducing a communication delay.

For implementation of the eighth frequency unit set, refer to an implementation principle of the fourth frequency unit set. Details are not described herein again.

In a possible design solution, the method provided in FIG. 10 may further include step 10-1.

Step 10-1: The network device sends fifth indication information to the terminal device. Correspondingly, the terminal device receives the fifth indication information from the network device.

The fifth indication information indicates a plurality of candidate frequency unit sets. The seventh frequency unit set is one of the plurality of candidate frequency unit sets.

For an implementation principle of the fifth indication information, refer to an implementation principle of the second indication information. For an implementation principle of step 10-1, refer to related descriptions of step 10-

1. Details are not described herein again.

In a possible design solution, the fourth indication information may further indicate one or more of the following corresponding to the third time unit: a modulation and coding scheme MCS, a frequency hopping interval, or precoding and a quantity of layers.

For an implementation principle in which the fourth indication information indicates one or more of the following corresponding to the third time unit: the modulation and coding scheme MCS, the frequency hopping interval, or the precoding and the quantity of layers, refer to related descriptions of the first indication information. Details are not described herein again.

A resource used by the terminal device to send a signal in FIG. 5, FIG. 7, or FIG. 10 may support a PUSCH repetition type A, a PUSCH repetition type B, or a transport block processing over multiple slots PUSCH. For a specific principle, refer to conventional technologies. Details are not described herein again.

In addition, it should be noted that in FIG. 5, FIG. 7, or FIG. 10, a quantity of frequency units in a frequency resource set may be a quantity of complete frequency units, or may be a sum of a quantity of complete frequency units and a quantity of incomplete frequency units.

It may be understood that the time unit and the frequency unit in FIG. 5, FIG. 7, or FIG. 10 may be for a same BWP unless otherwise specified.

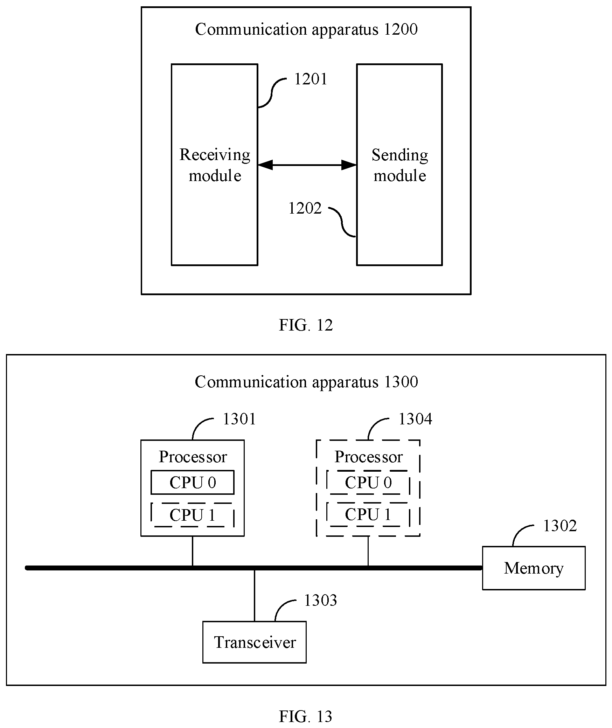

The uplink transmission methods provided in embodiments of this application are described above in detail with reference to FIG. 5 to FIG. 11. With reference to FIG. 12 and FIG. 13, the following describes in detail communication apparatuses configured to perform the uplink transmission methods provided in embodiments of this application.

For example, FIG. 12 is a first diagram of a structure of a communication apparatus 1200 according to an embodiment of this application. As shown in FIG. 12, the communication apparatus 1200 includes a receiving module 1201 and a sending module 1202. For ease of description, FIG. 12 shows only main parts of the communication apparatus 1200.

In some embodiments, the communication apparatus 1200 may be used in the communication system shown in FIG. 4, and perform a function of a terminal device in the uplink transmission method shown in FIG. 5.

The receiving module 1201 is configured to receive first indication information from a network device.

The first indication information indicates a first frequency unit set and a second frequency unit set.

The sending module 1202 is configured to send a first signal on a third frequency unit set corresponding to a first time unit when a type of the first time unit is an uplink time unit.

The third frequency unit set is a frequency unit set determined based on the first frequency unit set.

The sending module 1202 is further configured to send the first signal on a fourth frequency unit set corresponding to the first time unit when the type of the first time unit is a duplex time unit.

The fourth frequency unit set is a frequency unit set determined based on the second frequency unit set, and a frequency range of the fourth frequency unit set is within a frequency range of an uplink subband of the first time unit. The first time unit is a time unit used for sending the first signal, and one frequency unit set includes one or more frequency units.

In a possible design solution, the first signal may be carried on a configured grant first PUSCH. The first time unit may be a time unit determined based on a configured grant periodicity and a configured grant start time unit.

In a possible design solution, the third frequency unit set may be the first frequency unit set. Alternatively, the third frequency unit set may be a frequency unit set determined based on the first frequency unit set and a frequency hopping pattern.

In a possible design solution, the fourth frequency unit set may be the second frequency unit set. Alternatively, the fourth frequency unit set may be a frequency unit set determined based on the second frequency unit set and a frequency hopping pattern.

In a possible design solution, the first indication information may include first sub-indication information and second sub-indication information, the first sub-indication information indicates the first frequency unit set, and the second sub-indication information indicates the second frequency unit set. The first sub-indication information may be carried in radio resource control RRC signaling, and the second sub-indication information may be carried in downlink control information DCI. Alternatively, the first sub-indication information may be carried in the DCI, and the second sub-indication information may be carried in the RRC signaling.

In a possible design solution, the receiving module 1201 is further configured to receive second indication information from the terminal device. The second indication information indicates a plurality of candidate frequency unit sets. The first frequency unit set is one of the plurality of candidate frequency unit sets, and/or the second frequency unit set is one of the plurality of candidate frequency unit sets.

In a possible design solution, the first indication information may further indicate one or more of the following corresponding to the first time unit: a modulation and coding scheme MCS, a frequency hopping interval, or precoding and a quantity of layers.

Optionally, the receiving module 1201 and the sending module 1202 may be integrated into one module, for example, a transceiver module (not shown in FIG. 12). The transceiver module is configured to implement a sending function and a receiving function of the communication apparatus 1200.

Optionally, the communication apparatus 1200 may further include a processing module (not shown in FIG. 12). The processing module is configured to implement a processing function of the communication apparatus 1200.

Optionally, the communication apparatus 1200 may further include a storage module (not shown in FIG. 12). The storage module stores a program or instructions. When the receiving module 1201 executes the program or the instructions, the communication apparatus 1200 is enabled to perform a function of the terminal device in the uplink transmission method shown in any one of the possible designs of FIG. 5.

It should be understood that the processing module in the communication apparatus 1200 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1200 may be a terminal device, or may be a chip (system) or another part or component that may be disposed in the terminal device, or may be an apparatus including the terminal device. This is not limited in this application.

In addition, for technical effects of the communication apparatus 1200, refer to the technical effects of the uplink transmission method shown in any one of the possible designs of FIG. 5. Details are not described herein again.

In some other embodiments, the communication apparatus 1200 may be used in the communication system shown in FIG. 4, and perform a function of a terminal device in the uplink transmission method shown in FIG. 7. The receiving module 1201 is configured to receive third indication information from a network device.

The third indication information indicates a fifth frequency unit set.

The sending module 1202 is configured to send a second signal on a sixth frequency unit set corresponding to a second time unit when the second time unit is a duplex time unit.

The sixth frequency unit set is a frequency unit set determined based on the fifth frequency unit set, and a frequency range of the sixth frequency unit set is within a range of an uplink subband of the second time unit. A frequency range of at least a part of frequency units of the fifth frequency unit set is different from the frequency range of the uplink subband corresponding to the second time unit. The second time unit is a time unit used for sending the second signal, and one frequency unit set includes one or more frequency units.

In a possible design solution, the second signal may be carried on a configured grant second physical uplink shared channel PUSCH. The second time unit may be a time unit determined based on a configured grant periodicity and a configured grant start time unit.

In a possible design solution, the sixth frequency unit set may be a frequency unit set determined based on the fifth frequency unit set. Alternatively, the sixth frequency unit set may be a frequency unit set determined based on the fifth frequency unit set and a frequency hopping pattern.

In a possible design solution, a quantity of frequency units between a start frequency and an end frequency of the sixth frequency unit set may be determined based on one or more of the following: a quantity of frequency units in the fifth frequency unit set, a first scaling parameter, a second scaling parameter, or a quantity of frequency units in the uplink subband corresponding to the second time unit.

Optionally, a quantity of frequency units between a start frequency and an end frequency of the fifth frequency unit set is a first quantity, a quantity of frequency units between a start frequency and an end frequency of the sixth frequency unit set is a second quantity, and the second quantity may be determined based on the first quantity and a first scaling parameter.

Further, the second quantity may satisfy the following relationship: $L_{PUSCH,2}=[L_{PUSCH,1}\times\beta]$. $L_{PUSCH,2}$ is the second quantity, $L_{PUSCH,1}$ is the first quantity, $\beta$ is the first scaling parameter, $0 < \beta < 1$, and [ ] is a rounding operation. The rounding operation includes rounding up, rounding down, or rounding off.

Optionally, a quantity of frequency units between a start frequency and an end frequency of the fifth frequency unit set is a first quantity, and a quantity of frequency units between a start frequency and an end frequency of the sixth frequency unit set is a second quantity. The second quantity may be equal to a quantity of frequency units in the uplink subband corresponding to the second time unit. Alternatively, the second quantity is equal to the first quantity.

Optionally, a quantity of frequency units between a start frequency and an end frequency of the sixth frequency unit set is a second quantity, and the second quantity may be determined based on a second scaling parameter and a quantity of frequency units in the uplink subband corresponding to the second time unit.

Further, the quantity of frequency units between the start frequency and the end frequency of the sixth frequency unit set may satisfy the following relationship: $L_{PUSCH,2} = N_{UL\ subband}^{size}/\gamma$ . $L_{PUSCH,2}$ is the second quantity, $N_{UL\ subband}^{size}$ is the quantity of frequency units in the uplink subband corresponding to the second time unit, $\gamma$ is the second scaling parameter, and $\gamma > 1$.

Optionally, a quantity of frequency units between a start frequency and an end frequency of the fifth frequency unit set is a first quantity. If the first quantity is less than or equal to the quantity of frequency units in the uplink subband corresponding to the second time unit, the second quantity may be equal to the quantity of frequency units in the fifth frequency unit set. Alternatively, if the first quantity is greater than the quantity of frequency units in the uplink subband corresponding to the second time unit, and the quantity of frequency units in the fifth frequency unit is less than or equal to the quantity of frequency units in the uplink subband corresponding to the second time unit, the quantity of frequency units in the sixth frequency unit set may be equal to the quantity of frequency units in the fifth frequency unit set. Alternatively, if the first quantity is greater than the quantity of frequency units in the uplink subband corresponding to the second time unit, and the quantity of frequency units in the fifth frequency unit is greater than the quantity of frequency units in the uplink subband corresponding to the second time unit, the quantity of frequency units in the sixth frequency unit set may be less than or equal to the quantity of frequency units in the uplink subband corresponding to the second time unit.

In a possible design solution, the start frequency unit of the sixth frequency unit set is determined based on one or more of the following: a start frequency unit of the fifth frequency unit set, the quantity of frequency units in the uplink subband corresponding to the second time unit, a start frequency unit of the uplink subband corresponding to the second time unit, a third scaling parameter, or the quantity of frequency units between the start frequency and the end frequency of the sixth frequency unit set.

Optionally, a start frequency unit of the sixth frequency unit set may be determined based on a result of a modulo operation of an index of a start frequency unit of the fifth frequency unit set on the quantity of frequency units in the uplink subband corresponding to the second time unit.

Further, if the frequency unit is a resource block, the start frequency unit of the sixth frequency unit set may satisfy the following relationship: $RB_{PUSCH}^{start,2} = RB_{PUSCH}^{start,1} mod N_{UL\ subband}^{size,RB}$ , or $RB_{PUSCH}^{start,2} = RB_{PUSCH}^{start,1} mod N_{UL\ subband}^{size,RB} + RB_{UL\ Subband}^{start}$ . Alternatively, if the frequency unit is a resource block group, the start frequency unit of the sixth frequency unit set satisfies the following relationship: $RBG_{PUSCH}^{start,2} = RBG_{PUSCH}^{start,1} mod N_{UL\ subband}^{size,RBG}$ , or $RBG_{PUSCH}^{start,2} = RBG_{PUSCH}^{start,1} mod N_{UL\ subband}^{size,RBG} + RBG_{UL\ Subband}^{start}$ . $RB_{PUSCH}^{start,2}$ is an index of a start resource block of the sixth frequency unit set, $RB_{PUSCH}^{start,1}$ is an index of a start resource block of the fifth frequency unit set, $N_{UL\ subband}^{size,RB}$ is a quantity of resource blocks in the uplink subband corresponding to the second time unit, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $RBG_{PUSCH}^{start,1}$ is an index of a start resource block group of the fifth frequency unit set, $N_{UL\ subband}^{size,RBG}$ is a quantity of resource block groups in the uplink subband corresponding to the second time unit, $RBG_{UL\ Subband}^{start}$ is an index of a start resource block group of the uplink subband corresponding to the second time unit, and mod is a modulo operation.

Optionally, a start frequency unit of the sixth frequency unit set may be determined based on a start frequency unit of the fifth frequency unit set and a third scaling parameter.

Further, if the frequency unit is a resource block, the start frequency unit of the sixth frequency unit set may satisfy the following relationship: $RB_{PUSCH}^{start,2} = \left[ RB_{PUSCH}^{start,1} \times \alpha \right]$, or $RB_{PUSCH}^{start,2} = \left[ RB_{PUSCH}^{start,1} \times \alpha \right] + RB_{UL\ Subband}^{start}$. Alternatively, if the frequency unit is a resource block group, the start frequency unit of the sixth frequency unit set satisfies the following relationship: $RBG_{PUSCH}^{start,2} = \left[ RBG_{PUSCH}^{start,1} \times \alpha \right]$, or $RBG_{PUSCH}^{start,2} = \left[ RBG_{PUSCH}^{start,1} \times \alpha \right] + RBG_{UL\ Subband}^{start}$. $RB_{PUSCH}^{start,2}$ is an index of a start resource block of the sixth frequency unit set, $RB_{PUSCH}^{start,1}$ is an index of a start resource block of the fifth frequency unit set, $\alpha$ is the third scaling parameter, $0 < \alpha < 1$, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $RBG_{PUSCH}^{start,1}$ is an index of a start resource block group of the fifth frequency unit set, $RBG_{UL\ Subband}^{start}$ is an index of a start resource block group of the uplink subband corresponding to the second time unit, and [ ] is a rounding operation. The rounding operation includes rounding up, rounding down, or rounding off.

Optionally, a start frequency unit of the sixth frequency unit set may be a start frequency unit of the uplink subband corresponding to the second time unit. Alternatively, the start frequency unit of the sixth frequency unit set may be a start frequency unit of the fifth frequency unit set. Alternatively, if the frequency unit is a resource block, the start frequency unit of the sixth frequency unit set may satisfy the following relationship: $RB_{PUSCH}^{start,2} = N_{UL\ subband}^{size,RB} - L_{PUSCH,2}^{RB} + RB_{UL\ Subband}^{start}$. Alternatively, if the frequency unit is a resource block group, the start frequency unit of the sixth frequency unit set may satisfy the following relationship: $RBG_{PUSCH}^{start,2} = N_{UL\ subband}^{size,RBG} - L_{PUSCH,2}^{RBG} + RBG_{UL\ Subband}^{start}$. Alternatively, if the frequency unit is a resource block, the start frequency unit of the sixth frequency unit set may satisfy the following relationship: $RB_{PUSCH}^{start,2} = \left[ (N_{UL\ subband}^{size,RB} - L_{PUSCH,2}^{RB})/2 \right] + RB_{UL\ Subband}^{start}$. Alternatively, if the frequency unit is a resource block group, the start frequency unit of the sixth frequency unit set may satisfy the following relationship: $RBG_{PUSCH}^{start,2} = \left[ (N_{UL\ subband}^{size,RBG} - L_{PUSCH,2}^{RBG})/2 \right] + RBG_{UL\ Subband}^{start}$. $RB_{PUSCH}^{start,2}$ is an index of a start resource block of the sixth frequency unit set, $N_{UL\ subband}^{size,RB}$ is a quantity of resource blocks in the uplink subband corresponding to the second time unit, $L_{PUSCH,2}^{RB}$ is a second quantity measured in resource blocks, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $N_{UL\ subband}^{size,RBG}$ is a quantity of resource block groups in the uplink subband corresponding to the second time unit, $L_{PUSCH,2}^{RBG}$ is a second quantity measured in resource block groups, and $RBG_{UL\ Subband}^{start}$ is an index of a start resource block group of the uplink subband corresponding to the second time unit.

Optionally, the receiving module 1201 and the sending module 1202 may be integrated into one module, for example, a transceiver module (not shown in FIG. 12). The transceiver module is configured to implement a sending function and a receiving function of the communication apparatus 1200.

Optionally, the communication apparatus 1200 may further include a processing module (not shown in FIG. 12). The processing module is configured to implement a processing function of the communication apparatus 1200.

Optionally, the communication apparatus 1200 may further include a storage module (not shown in FIG. 12). The storage module stores a program or instructions. When the receiving module 1201 executes the program or the instructions, the communication apparatus 1200 is enabled to perform a function of the terminal device in the uplink transmission method shown in any one of the possible designs of FIG. 7.

It should be understood that the processing module in the communication apparatus 1200 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1200 may be a terminal device, or may be a chip (system) or another part or component that may be disposed in the terminal device, or may be an apparatus including the terminal device. This is not limited in this application.

In addition, for technical effects of the communication apparatus 1200, refer to the technical effects of the uplink transmission method shown in any one of the possible designs of FIG. 7. Details are not described herein again.

In some other embodiments, the communication apparatus 1200 may be used in the communication system shown in FIG. 4, and perform a function of a terminal device in the uplink transmission method shown in FIG. 10.

The receiving module 1201 is configured to receive fourth indication information from a network device.

The fourth indication information indicates a seventh frequency unit set.

The sending module 1202 is configured to send a third signal on an eighth frequency unit set corresponding to a third time unit when the third time unit is a duplex time unit and a 1st third time unit in a configured grant periodicity is an uplink time unit. The third time unit is a time unit used for sending the third signal in one configured grant periodicity, and there are a plurality of third time units. The frequency range of the seventh frequency unit set is outside the frequency range of the uplink subband of the 1st third time unit. The eighth frequency unit set corresponding to the third time unit is determined based on the seventh frequency unit set, and a frequency range of the eighth frequency unit set corresponding to one third time unit is within the frequency range of the uplink subband of the third time unit. One frequency unit set includes one or more frequency units. One frequency unit set includes one or more frequency units.

In a possible design solution, the third signal may be carried on a configured grant third physical uplink shared channel PUSCH. The third time unit may be a time unit determined based on the configured grant periodicity and the configured grant start time unit.

In a possible design solution, the eighth frequency unit set may be the seventh frequency unit set. Alternatively, the eighth frequency unit set may be a frequency unit set determined based on the seventh frequency unit set and a frequency hopping pattern.

In a possible design solution, the receiving module 1201 is further configured to receive fifth indication information from the network device. The fifth indication information indicates a plurality of candidate frequency unit sets. The seventh frequency unit set is one of the plurality of candidate frequency unit sets.

In a possible design solution, the fourth indication information may further indicate one or more of the following corresponding to the 1st third time unit: a modulation and coding scheme MCS, a frequency hopping interval, or precoding and a quantity of layers.

Optionally, the receiving module 1201 and the sending module 1202 may be integrated into one module, for example, a transceiver module (not shown in FIG. 12). The transceiver module is configured to implement a sending function and a receiving function of the communication apparatus 1200.

Optionally, the communication apparatus 1200 may further include a processing module (not shown in FIG. 12). The processing module is configured to implement a processing function of the communication apparatus 1200.

Optionally, the communication apparatus 1200 may further include a storage module (not shown in FIG. 12). The storage module stores a program or instructions. When the receiving module 1201 executes the program or the instructions, the communication apparatus 1200 is enabled to perform a function of the terminal device in the uplink transmission method shown in any one of the possible designs of FIG. 10.

It should be understood that the processing module in the communication apparatus 1200 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1200 may be a terminal device, or may be a chip (system) or another part or component that may be disposed in the terminal device, or may be an apparatus including the terminal device. This is not limited in this application.

In addition, for technical effects of the communication apparatus 1200, refer to the technical effects of the uplink transmission method shown in FIG. 10. Details are not described herein again.

In some other embodiments, the communication apparatus 1200 may be used in the communication system shown in FIG. 4, and perform a function of a network device in the uplink transmission method shown in FIG. 5.

The sending module 1202 is configured to send first indication information to the terminal device.

The first indication information indicates a first frequency unit set and a second frequency unit set.

The receiving module 1201 is configured to receive a first signal on a third frequency unit set corresponding to a first time unit when a type of the first time unit is an uplink time unit.

The third frequency unit set is a frequency unit set determined based on the first frequency unit set. The network device receives the first signal on a fourth frequency unit set corresponding to the first time unit if the type of the first time unit is a duplex time unit. The fourth frequency unit set is a frequency unit set determined based on the second frequency unit set, and a frequency range of the fourth frequency unit set is within a frequency range of an uplink subband of the first time unit. The first time unit is a time unit used for sending the first signal, and one frequency unit set includes one or more frequency units.

In a possible design solution, the first signal may be carried on a configured grant first physical uplink shared channel PUSCH. The first time unit may be a time unit determined based on a configured grant periodicity and a configured grant start time unit.

In a possible design solution, the third frequency unit set may be the first frequency unit set. Alternatively, the third frequency unit set may be a frequency unit set determined based on the first frequency unit set and a frequency hopping pattern.

In a possible design solution, the fourth frequency unit set may be the second frequency unit set. Alternatively, the fourth frequency unit set may be a frequency unit set determined based on the second frequency unit set and a frequency hopping pattern.

In a possible design solution, the first indication information may include first sub-indication information and second sub-indication information, the first sub-indication information indicates the first frequency unit set, and the second sub-indication information indicates the second frequency unit set. The first sub-indication information may be carried in radio resource control RRC signaling, and the second sub-indication information may be carried in downlink control information DCI. Alternatively, the first sub-indication information may be carried in the DCI, and the second sub-indication information may be carried in the RRC signaling.

In a possible design solution, the sending module 1202 is further configured to send second indication information to the terminal device. The second indication information indicates a plurality of candidate frequency unit sets. The first frequency unit set is one of the plurality of candidate frequency unit sets, and/or the second frequency unit set is one of the plurality of candidate frequency unit sets.

In a possible design solution, the first indication information further indicates one or more of the following corresponding to the first time unit: a modulation and coding scheme MCS, a frequency hopping interval, or precoding and a quantity of layers.

Optionally, the receiving module 1201 and the sending module 1202 may be integrated into one module, for example, a transceiver module (not shown in FIG. 12). The transceiver module is configured to implement a sending function and a receiving function of the communication apparatus 1200.

Optionally, the communication apparatus 1200 may further include a processing module (not shown in FIG. 12). The processing module is configured to implement a processing function of the communication apparatus 1200.

Optionally, the communication apparatus 1200 may further include a storage module (not shown in FIG. 12). The storage module stores a program or instructions. When the receiving module 1201 executes the program or the instructions, the communication apparatus 1200 is enabled to perform a function of the network device in the uplink transmission method shown in any one of the possible designs of FIG. 5.

It should be understood that the processing module in the communication apparatus 1200 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1200 may be a network device, may be a chip (system) or another part or component that may be disposed in the network device, or may be an apparatus including the network device. This is not limited in this application.

In addition, for technical effects of the communication apparatus 1200, refer to the technical effects of the uplink transmission method shown in any one of the possible designs of FIG. 5. Details are not described herein again.

In some other embodiments, the communication apparatus 1200 may be used in the communication system shown in FIG. 4, and perform a function of a network device in the uplink transmission method shown in FIG. 7.

The sending module 1202 is configured to send third indication information to the terminal device.

The third indication information indicates a fifth frequency unit set.

The receiving module 1201 is configured to receive a second signal on a sixth frequency unit set corresponding to a second time unit when the second time unit is a duplex time unit.

The sixth frequency unit set is a frequency unit set determined based on the fifth frequency unit set, and a frequency range of the sixth frequency unit set is within a range of an uplink subband of the second time unit. A frequency range of at least a part of frequency units of the fifth frequency unit set is different from the frequency range of the uplink subband corresponding to the second time unit. The second time unit is a time unit used for sending the second signal, and one frequency unit set includes one or more frequency units.

In a possible design solution, the first signal may be carried on a configured grant second physical uplink shared channel PUSCH. The second time unit may be a time unit determined based on a configured grant periodicity and a configured grant start time unit.

In a possible design solution, the sixth frequency unit set may be a frequency unit set determined based on the fifth frequency unit set. Alternatively, the sixth frequency unit set may be a frequency unit set determined based on the fifth frequency unit set and a frequency hopping pattern.

In a possible design solution, a quantity of frequency units between a start frequency and an end frequency of the sixth frequency unit set may be determined based on one or more of the following: a quantity of frequency units in the fifth frequency unit set, a first scaling parameter, a second scaling parameter, or a quantity of frequency units in the uplink subband corresponding to the second time unit.

Optionally, a quantity of frequency units between a start frequency and an end frequency of the fifth frequency unit set is a first quantity, a quantity of frequency units between a start frequency and an end frequency of the sixth frequency unit set is a second quantity, and the second quantity may be determined based on the first quantity and a first scaling parameter.

Further, the second quantity may satisfy the following relationship: $L_{PUSCH,2} = [L_{PUSCH,1} \times \beta]$. $L_{PUSCH,2}$ is the second quantity, $L_{PUSCH,1}$ is the first quantity, $\beta$ is the first scaling parameter, $0 < \beta < 1$, and [ ] is a rounding operation. The rounding operation includes rounding up, rounding down, or rounding off.

Optionally, a quantity of frequency units between a start frequency and an end frequency of the fifth frequency unit set is a first quantity, and a quantity of frequency units between a start frequency and an end frequency of the sixth frequency unit set is a second quantity. The second quantity may be equal to a quantity of frequency units in the uplink subband corresponding to the second time unit. Alternatively, the second quantity may be equal to the first quantity.

Optionally, a quantity of frequency units between a start frequency and an end frequency of the sixth frequency unit set is a second quantity, and the second quantity may be determined based on a second scaling parameter and a quantity of frequency units in the uplink subband.

Further, the second quantity satisfies the following relationship: $L_{PUSCH,2} = N_{UL\ subband}^{size}/\gamma$. $L_{PUSCH,2}$ is the second quantity, $N_{UL\ subband}^{size}$ is the quantity of frequency units in the uplink subband, $\gamma$ is the second scaling parameter, and $\gamma > 1$.

Optionally, a quantity of frequency units between a start frequency and an end frequency of the fifth frequency unit set is a first quantity. If the first quantity is less than or equal to the quantity of frequency units in the uplink subband, the second quantity may be equal to the quantity of frequency units in the fifth frequency unit set. Alternatively, if the first quantity is greater than the quantity of frequency units in the uplink subband, and the quantity of frequency units in the fifth frequency unit is less than or equal to the quantity of frequency units in the uplink subband corresponding to the second time unit, the quantity of frequency units in the sixth frequency unit set may be equal to the quantity of frequency units in the fifth frequency unit set. Alternatively, if the first quantity is greater than the quantity of frequency units in the uplink subband corresponding to the second time unit, and the quantity of frequency units in the fifth frequency unit is greater than the quantity of frequency units in the uplink subband corresponding to the second time unit, the quantity of frequency units in the sixth frequency unit set may be less than or equal to the quantity of frequency units in the uplink subband corresponding to the second time unit.

In a possible design solution, a start frequency unit of the sixth frequency unit set may be determined based on one or more of the following: a start frequency unit of the fifth frequency unit set, the quantity of frequency units in the uplink subband corresponding to the second time unit, a start frequency unit of the uplink subband corresponding to the second time unit, a third scaling parameter, or the quantity of frequency units between the start frequency and the end frequency of the sixth frequency unit set.

Optionally, a start frequency unit of the sixth frequency unit set may be determined based on a result of a modulo operation of an index of a start frequency unit of the fifth frequency unit set on the quantity of frequency units in the uplink subband.

Further, if the frequency unit is a resource block, the start frequency unit of the sixth frequency unit set may satisfy the following relationship: $RB_{PUSCH}^{start,2} = RB_{PUSCH}^{start,1} mod N_{UL\ subband}^{size,RB}$, or $RB_{PUSCH}^{start,5} = RB_{PUSCH}^{start,1} mod N_{UL\ subband}^{size,RB} + RB_{UL\ Subband}^{start}$. Alternatively, if the frequency unit is a resource block group, the start frequency unit of the sixth frequency unit set satisfies the following relationship: $RBG_{PUSCH}^{start,2} = RBG_{PUSCH}^{start,1} mod N_{UL\ subband}^{size,RBG}$, or $RBG_{PUSCH}^{start,2} = RBG_{PUSCH}^{start,1} mod N_{UL\ subband}^{size,RBG} + RBG_{UL\ Subband}^{start}$. $RB_{PUSCH}^{start,2}$ is an index of a start resource block of the sixth frequency unit set, $RB_{PUSCH}^{start,1}$ is an index of a start resource block of the fifth frequency unit set, $N_{UL\ subband}^{size,RB}$ is a quantity of resource blocks in the uplink subband corresponding to the second time unit, $RB_{UL\ Subband}^{start}$ is an index of a start resource block of the uplink subband corresponding to the second time unit,

$RBG_{PUSCH}^{start,2}$ is an index of a start resource block group of the sixth frequency unit set, $RBG_{PUSCH}^{start,1}$ is an index of a start resource block group of the fifth frequency unit set, $N_{UL\ subband}^{size,RBG}$ is a quantity of resource block groups in the uplink subband corresponding to the second time unit, $RBG_{UL\ Subband}^{start}$ is an index of a start resource block group of the uplink subband corresponding to the second time unit, and mod is a modulo operation.

Optionally, a start frequency unit of the sixth frequency unit set may be determined based on a start frequency unit of the fifth frequency unit set and a third scaling parameter.

Further, if the frequency unit is a resource block, the start frequency unit of the sixth frequency unit set may satisfy the following relationship: $RB_{PUSCH}^{start,2} = \left[RB_{PUSCH}^{start,1} \times \alpha\right]$, or $RB_{PUSCH}^{start,2} = \left[RB_{PUSCH}^{start,1} \times \alpha\right] + RB_{UL\ Subband}^{start}$. Alternatively, if the frequency unit is a resource block group, the start frequency unit of the sixth frequency unit set may satisfy the following relationship: $RBG_{PUSCH}^{start,2} = \left[RBG_{PUSCH}^{start,1} \times \alpha\right]$, or $RBG_{PUSCH}^{start,2} = \left[RBG_{PUSCH}^{start,1} \times \alpha\right] + RBG_{UL\ Subband}^{start}$. $RB_{PUSCH}^{start,2}$ is an index of a start resource block of the sixth frequency unit set, $RB_{PUSCH}^{start,1}$ is an index of a start resource block of the fifth frequency unit set, $\alpha$ is the third scaling parameter, $0 < \alpha < 1$, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $RBG_{PUSCH}^{start,1}$ is an index of a start resource block group of the fifth frequency unit set, $RBG_{UL\ Subband}^{start}$ is an index of a start resource block group of the uplink subband corresponding to the second time unit, and [ ] is a rounding operation. The rounding operation includes rounding up, rounding down, or rounding off.

Optionally, a start frequency unit of the sixth frequency unit set may be a start frequency unit of the uplink subband corresponding to the second time unit. Alternatively, the start frequency unit of the sixth frequency unit set may be a start frequency unit of the fifth frequency unit set. Alternatively, if the frequency unit is a resource block, the start frequency unit of the sixth frequency unit set may satisfy the following relationship: $RB_{PUSCH}^{start,2} = N_{UL\ subband}^{size,RB} - L_{PUSCH,2}^{RB} + RB_{UL\ Subband}^{start}$. Alternatively, if the frequency unit is a resource block group, the start frequency unit of the sixth frequency unit set may satisfy the following relationship: $RBG_{PUSCH}^{start,2} = N_{UL\ subband}^{size,RBG} - L_{PUSCH,2}^{RBG} + RBG_{UL\ Subband}^{start}$. Alternatively, if the frequency unit is a resource block, the start frequency unit of the sixth frequency unit set may satisfy the following relationship: $RB_{PUSCH}^{start,2} = \left[(N_{UL\ subband}^{size,RB} - L_{PUSCH,2}^{RB})/2\right] + RB_{UL\ Subband}^{start}$. Alternatively, if the frequency unit is a resource block group, the start frequency unit of the sixth frequency unit set may satisfy the following relationship: $RBG_{PUSCH}^{start,2} = \left[(N_{UL\ subband}^{size,RBG} - L_{PUSCH,2}^{RBG})/2\right] + RBG_{UL\ Subband}^{start}$. $RB_{PUSCH}^{start,2}$ is an index of a start resource block of the sixth frequency unit set, $N_{UL\ subband}^{size,RB}$ is a quantity of resource blocks in the uplink subband corresponding to the second time unit, $L_{PUSCH,2}^{RB}$ is a second quantity measured in resource blocks, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $N_{UL\ subband}^{size,RBG}$ is a quantity of resource block groups in the uplink subband corresponding to the second time unit, $L_{PUSCH,2}^{RBG}$ is a second quantity measured in resource block groups, and $RBG_{UL\ Subband}^{start}$ is an index of a start resource block group of the uplink subband corresponding to the second time unit.

Optionally, the receiving module 1201 and the sending module 1202 may be integrated into one module, for example, a transceiver module (not shown in FIG. 12). The transceiver module is configured to implement a sending function and a receiving function of the communication apparatus 1200.

Optionally, the communication apparatus 1200 may further include a processing module (not shown in FIG. 12). The processing module is configured to implement a processing function of the communication apparatus 1200.

Optionally, the communication apparatus 1200 may further include a storage module (not shown in FIG. 12). The storage module stores a program or instructions. When the receiving module 1201 executes the program or the instructions, the communication apparatus 1200 is enabled to perform a function of the network device in the uplink transmission method shown in any one of the possible designs of FIG. 7.

It should be understood that the processing module in the communication apparatus 1200 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1200 may be a network device, may be a chip (system) or another part or component that may be disposed in the network device, or may be an apparatus including the network device. This is not limited in this application.

In addition, for technical effects of the communication apparatus 1200, refer to the technical effects of the uplink transmission method shown in any one of the possible designs of FIG. 7. Details are not described herein again.

In some other embodiments, the communication apparatus 1200 may be used in the communication system shown in FIG. 4, and perform a function of a network device in the uplink transmission method shown in FIG. 10.

The sending module 1202 is configured to send fourth indication information to the terminal device.

The fourth indication information indicates a seventh frequency unit set.

The receiving module 1201 is configured to send a third signal on an eighth frequency unit set corresponding to a third time unit when the third time unit includes an uplink time unit and a 1$^{st}$ third time unit in a configured grant periodicity is a duplex time unit.

The third time unit is a time unit used for sending the third signal in one configured grant periodicity, and there are a plurality of third time units. The frequency range of the seventh frequency unit set is outside the frequency range of the uplink subband of the 1$^{st}$ third time unit. The eighth frequency unit set corresponding to the third time unit is determined based on the seventh frequency unit set, and a frequency range of the eighth frequency unit set corresponding to one third time unit is within the frequency range of the uplink subband of the third time unit. One frequency unit set includes one or more frequency units.

In a possible design solution, the third signal may be carried on a configured grant third physical uplink shared channel PUSCH. The 1$^{st}$ third time unit may be a time unit determined based on a configured grant periodicity and a configured grant start time unit.

In a possible design solution, the eighth frequency unit set may be the seventh frequency unit set. Alternatively, the eighth frequency unit set may be a frequency unit set determined based on the seventh frequency unit set and a frequency hopping pattern.

In a possible design solution, the sending module 1202 is further configured to send fifth indication information to the terminal device. The fifth indication information indicates a plurality of candidate frequency unit sets. The seventh frequency unit set is one of the plurality of candidate frequency unit sets.

In a possible design solution, the fourth indication information may further indicate one or more of the following corresponding to the third time unit: a modulation and coding scheme MCS, a frequency hopping interval, or precoding and a quantity of layers.

Optionally, the receiving module 1201 and the sending module 1202 may be integrated into one module, for example, a transceiver module (not shown in FIG. 12). The transceiver module is configured to implement a sending function and a receiving function of the communication apparatus 1200.

Optionally, the communication apparatus 1200 may further include a processing module (not shown in FIG. 12). The processing module is configured to implement a processing function of the communication apparatus 1200.

Optionally, the communication apparatus 1200 may further include a storage module (not shown in FIG. 12). The storage module stores a program or instructions. When the receiving module 1201 executes the program or the instructions, the communication apparatus 1200 is enabled to perform a function of the network device in the uplink transmission method shown in any one of the possible designs of FIG. 10.

It should be understood that the processing module in the communication apparatus 1200 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1200 may be a network device, may be a chip (system) or another part or component that may be disposed in the network device, or may be an apparatus including the network device. This is not limited in this application.

In addition, for technical effects of the communication apparatus 1200, refer to the technical effects of the uplink transmission method shown in any one of the possible designs of FIG. 10. Details are not described herein again.

For example, FIG. 13 is a second diagram of a structure of a communication apparatus according to an embodiment of this application. The communication apparatus may be a terminal device or a network device, or a chip (a system) or another part or component that may be disposed in the terminal device or the network device. As shown in FIG.

13, the communication apparatus 1300 may include a processor 1301. Optionally, the communication apparatus 1300 may further include a memory 1302 and/or a transceiver 1303. The processor 1301 is coupled to the memory 1302 and the transceiver 1303, for example, may be connected to the memory 1302 and the transceiver 1303 through a communication bus.

The following specifically describes each component of the communication apparatus 1300 with reference to FIG. 13.

The processor 1301 is a control center of the communication apparatus 1300, and may be one processor, or may be a collective term of a plurality of processing elements. For example, the processor 1301 is one or more central processing units (central processing units, CPUs), or may be an application specific integrated circuit (application specific integrated circuit, ASIC), or may be one or more integrated circuits configured to implement embodiments of this application, for example, one or more digital signal processors (digital signal processors, DSPs) or one or more field programmable gate arrays (field programmable gate arrays, FPGAs).

Optionally, the processor 1301 may perform various functions of the communication apparatus 1300 by running or executing a software program stored in the memory 1302 and invoking data stored in the memory 1302.

During specific implementation, in an embodiment, the processor 1301 may include one or more CPUs, such as a CPU 0 and a CPU 1 shown in FIG. 13.

During specific implementation, in an embodiment, the communication apparatus 1300 may alternatively include a plurality of processors, for example, the processor 1301 and a processor 1304 shown in FIG. 13. Each of the processors may be a single-core processor (single-CPU), or may be a multi-core processor (multi-CPU). The processor herein may be one or more devices, circuits, and/or processing cores configured to process data (for example, computer program instructions).

The memory 1302 is configured to store the software program for executing the solutions in this application, and the processor 1301 controls execution. For a specific implementation, refer to the foregoing method embodiments. Details are not described herein again.

Optionally, the memory 1302 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium capable of carrying or storing expected program code in a form of instructions or a data structure and capable of being accessed by a computer, but is not limited thereto. The memory 1302 may be integrated with the processor 1301, or may exist independently, and is coupled to the processor 1301 through an interface circuit (not shown in FIG. 13) of the communication apparatus 1300. This is not specifically limited in this embodiment of this application.

The transceiver 1303 is configured to communicate with another communication apparatus. For example, the communication apparatus 1300 is a terminal device, and the transceiver 1303 may be configured to communicate with a network device or communicate with another terminal device. For another example, the communication apparatus 1300 is a network device, and the transceiver 1303 may be configured to communicate with a terminal device or communicate with another network device.

Optionally, the transceiver 1303 may include a receiver and a transmitter (not separately shown in FIG. 13). The receiver is configured to implement a receiving function, and the transmitter is configured to implement a sending function.

Optionally, the transceiver 1303 may be integrated with the processor 1301, or may exist independently, and is coupled to the processor 1301 through the interface circuit (not shown in FIG. 13) of the communication apparatus 1300. This is not specifically limited in this embodiment of this application.

It should be noted that the structure of the communication apparatus 1300 shown in FIG. 13 does not constitute a limitation on the communication apparatus. An actual communication apparatus may include more or fewer components than those shown in the figure, combine some components, or have different component arrangements.

In addition, for technical effects of the communication apparatus 1300, refer to the technical effects of the uplink transmission method in the foregoing method embodiments. Details are not described herein again.

It should be understood that the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which serves as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used for implementation, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, but may also represent an "and/or" relationship. For details, refer to the context for understanding.

In this application, at least one means one or more, and a plurality of means two or more. "At least one of the following" or a similar expression thereof means any combination of these items, including any combination of single items or a plurality of items. For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An uplink transmission method, wherein the method comprises:

   receiving first indication information from a network device, wherein the first indication information indicates a first frequency unit set and a second frequency unit set; and
   sending a first signal on a third frequency unit set corresponding to a first time unit if a type of the first time unit is an uplink time unit, wherein the third frequency unit set is a frequency unit set determined based on the first frequency unit set; or
   sending the first signal on a fourth frequency unit set corresponding to the first time unit if the type of the first time unit is a duplex time unit, wherein the fourth frequency unit set is a frequency unit set determined based on the second frequency unit set, and a frequency range of the fourth frequency unit set is within a frequency range of an uplink subband of the first time unit, wherein
   the first time unit is a time unit used for sending the first signal, and one frequency unit set comprises one or more frequency units.

2. The method according to claim 1, wherein the first signal is carried on a configured grant first physical uplink shared channel PUSCH, and the first time unit is a time unit determined based on a configured grant periodicity and a configured grant start time unit.

3. The method according to claim 1 or 2, wherein the third frequency unit set is the first frequency unit set, or the third frequency unit set is a frequency unit set determined based on the first frequency unit set and a frequency hopping pattern.

4. The method according to claim 1 or 2, wherein the fourth frequency unit set is the second frequency unit set, or the fourth frequency unit set is a frequency unit set determined based on the second frequency unit set and a frequency hopping pattern.

5. The method according to any one of claims 1 to 4, wherein the first indication information comprises first sub-indication information and second sub-indication information, the first sub-indication information indicates the first frequency unit set, and the second sub-indication information indicates the second frequency unit set; and
   the first sub-indication information is carried in radio resource control RRC signaling, and the second sub-indication information is carried in downlink control information DCI; or the first sub-indication information is carried in DCI, and the second sub-indication information is carried in RRC signaling.

6. An uplink transmission method, wherein the method comprises:

   receiving third indication information from a network device, wherein the third indication information indicates a fifth frequency unit set; and
   sending a second signal on a sixth frequency unit set corresponding to a second time unit if the second time unit is a duplex time unit, wherein the sixth frequency unit set is a frequency unit set determined based on the fifth frequency unit set, a frequency range of the sixth frequency unit set is within a range of an uplink subband of the second time unit, and a frequency range of at least a part of frequency units of the fifth frequency unit set is different from the frequency range of the uplink subband corresponding to the second time unit, wherein
the second time unit is a time unit used for sending the second signal, and one frequency unit set comprises one or more frequency units.

7. The method according to claim 6, wherein the second signal is carried on a configured grant second physical uplink shared channel PUSCH, and the second time unit is a time unit determined based on a configured grant periodicity and a configured grant start time unit.

8. The method according to claim 6 or 7, wherein the sixth frequency unit set is a frequency unit set determined based on the fifth frequency unit set, or the sixth frequency unit set is a frequency unit set determined based on the fifth frequency unit set and a frequency hopping pattern.

9. The method according to any one of claims 6 to 8, wherein a quantity of frequency units between a start frequency and an end frequency of the fifth frequency unit set is a first quantity, a quantity of frequency units between a start frequency and an end frequency of the sixth frequency unit set is a second quantity, and the second quantity is determined based on the first quantity and the first scaling parameter.

10. The method according to claim 9, wherein the second quantity satisfies the following relationship:

$$L_{PUSCH,2} = \left[ L_{PUSCH,1} \times \beta \right],$$

wherein
$L_{PUSCH,2}$ is the second quantity, $L_{PUSCH,1}$ is the first quantity, $\beta$ is the first scaling parameter, $0 < \beta < 1$, and [ ] is a rounding operation.

11. The method according to any one of claims 6 to 8, wherein a quantity of frequency units between a start frequency and an end frequency of the fifth frequency unit set is a first quantity, and a quantity of frequency units between a start frequency and an end frequency of the sixth frequency unit set is a second quantity; and

the second quantity is equal to a quantity of frequency units in the uplink subband corresponding to the second time unit; or
the second quantity is equal to the first quantity.

12. The method according to any one of claims 6 to 8, wherein a quantity of frequency units between a start frequency and an end frequency of the sixth frequency unit set is a second quantity, and the second quantity is determined based on a second scaling parameter and a quantity of frequency units in the uplink subband corresponding to the second time unit.

13. The method according to claim 12, wherein the second quantity satisfies the following relationship:

$$L_{PUSCH,2} = N_{UL\ subband}^{size} / \gamma,$$

wherein
$L_{PUSCH,2}$ is the second quantity, $N_{UL\ subband}^{size}$ is the quantity of frequency units in the uplink subband corresponding to the second time unit, $\gamma$ is the second scaling parameter, and $\gamma > 1$.

14. The method according to any one of claims 6 to 13, wherein a start frequency unit of the sixth frequency unit set is determined based on a result of a modulo operation of an index of a start frequency unit of the fifth frequency unit set on the quantity of frequency units in the uplink subband corresponding to the second time unit.

15. The method according to claim 14, wherein if the frequency unit is a resource block, the start frequency unit of the sixth frequency unit set satisfies the following relationship:

$$RB_{PUSCH}^{start,2} = RB_{PUSCH}^{start,1} mod N_{UL\ subband}^{size,RB},$$

or

$$RB_{PUSCH}^{start,2} = RB_{PUSCH}^{start,1} \, mod \, N_{UL \ subband}^{size,RB} + RB_{UL \ Subband}^{start};$$

or

if the frequency unit is a resource block group, the start frequency unit of the sixth frequency unit set satisfies the following relationship:

$$RBG_{PUSCH}^{start,2} = RBG_{PUSCH}^{start,1} \, mod \, N_{UL \ subband}^{size,RBG},$$

or

$$RBG_{PUSCH}^{start,2} = RBG_{PUSCH}^{start,1} \, mod \, N_{UL \ subband}^{size,RBG} + RBG_{UL \ Subband}^{start},$$

wherein

$RB_{PUSCH}^{start,2}$ is an index of a start resource block of the sixth frequency unit set, $RB_{PUSCH}^{start,1}$ is an index of a start resource block of the fifth frequency unit set, $N_{UL \ subband}^{size,RB}$ is a quantity of resource blocks in the uplink subband corresponding to the second time unit, $RB_{UL \ Subband}^{start}$ is an index of a start resource block of the uplink subband corresponding to the second time unit, $RBG_{PUSCH}^{start,2}$ is an index of a start resource block group of the sixth frequency unit set, $RBG_{PUSCH}^{start,1}$ is an index of a start resource block group of the fifth frequency unit set, $N_{UL \ subband}^{size,RBG}$ is a quantity of resource block groups in the uplink subband corresponding to the second time unit, $RBG_{UL \ Subband}^{start}$ is an index of a start resource block group of the uplink subband corresponding to the second time unit, and mod is a modulo operation.

16. The method according to any one of claims 6 to 13, wherein a start frequency unit of the sixth frequency unit set is determined based on a start frequency unit of the fifth frequency unit set and a third scaling parameter.

17. The method according to claim 16, wherein if the frequency unit is a resource block, the start frequency unit of the sixth frequency unit set satisfies the following relationship:

$$RB_{PUSCH}^{start,2} = \left[ RB_{PUSCH}^{start,1} \times \alpha \right],$$

or

$$RB_{PUSCH}^{start,2} = \left[ RB_{PUSCH}^{start,1} \times \alpha \right] + RB_{UL \ Subband}^{start};$$

or

if the frequency unit is a resource block group, the start frequency unit of the sixth frequency unit set satisfies the following relationship:

$$RBG_{PUSCH}^{start,2} = \left[ RBG_{PUSCH}^{start,1} \times \alpha \right],$$

or

$$RBG_{PUSCH}^{start,2} = \left[ RBG_{PUSCH}^{start,1} \times \alpha \right] + RBG_{UL \ Subband}^{start},$$

wherein

$RB_{PUSCH}^{start,2}$ is an index of a start resource block of the sixth frequency unit set, $RB_{PUSCH}^{start,1}$ is an index of a start resource block of the fifth frequency unit set, $\alpha$ is the third scaling parameter, $0 < \alpha < 1$, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $RBG_{PUSCH}^{start,1}$ is an index of a start resource block group of the fifth frequency unit set, $RBG_{UL\ Subband}^{start}$ is an index of a start resource block group of the uplink subband corresponding to the second time unit, and [ ] is a rounding operation.

18. The method according to any one of claims 6 to 13, wherein a start frequency unit of the sixth frequency unit set is a start frequency unit of the uplink subband corresponding to the second time unit; or

the start frequency unit of the sixth frequency unit set is a start frequency unit of the fifth frequency unit set; or
if the frequency unit is a resource block, the start frequency unit of the sixth frequency unit set satisfies the following relationship:

$$RB_{PUSCH}^{start,2} = N_{UL\ subband}^{size,RB} - L_{PUSCH,2}^{RB} + RB_{UL\ Subband}^{start};$$

or
if the frequency unit is a resource block group, the start frequency unit of the sixth frequency unit set satisfies the following relationship:

$$RBG_{PUSCH}^{start,2} = N_{UL\ subband}^{size,RB} - L_{PUSCH,2}^{RB} + RBG_{UL\ Subband}^{start};$$

or
if the frequency unit is a resource block, the start frequency unit of the sixth frequency unit set satisfies the following relationship:

$$RB_{PUSCH}^{start,2} = [(N_{UL\ subband}^{size,RBG} - L_{PUSCH,2}^{RBG})/2] + RB_{UL\ Subband}^{start};$$

or
if the frequency unit is a resource block group, the start frequency unit of the sixth frequency unit set satisfies the following relationship:

$$RBG_{PUSCH}^{start,2} = [(N_{UL\ subband}^{size,RBG} - L_{PUSCH,2}^{RBG})/2] + RBG_{UL\ Subband}^{start},$$

wherein

$RB_{PUSCH}^{start,2}$ is an index of a start resource block of the sixth frequency unit set, $N_{UL\ subband}^{size,RB}$ is a quantity of resource blocks in the uplink subband corresponding to the second time unit, $L_{PUSCH,2}^{RB}$ is a second quantity measured in resource blocks, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $N_{UL\ subband}^{size,RBG}$ is a quantity of resource block groups in the uplink subband corresponding to the second time unit, $L_{PUSCH,2}^{RBG}$ is a second quantity measured in resource block groups, and $RBG_{UL\ Subband}^{start}$ is an index of a start resource block group of the uplink subband corresponding to the second time unit.

19. An uplink transmission method, wherein the method comprises:

sending first indication information to a terminal device, wherein the first indication information indicates a first frequency unit set and a second frequency unit set; and

receiving a first signal on a third frequency unit set corresponding to a first time unit if a type of the first time unit is an uplink time unit, wherein the third frequency unit set is a frequency unit set determined based on the first frequency unit set; or

receiving the first signal on a fourth frequency unit set corresponding to the first time unit if the type of the first time unit is a duplex time unit, wherein the fourth frequency unit set is a frequency unit set determined based on the second frequency unit set, and a frequency range of the fourth frequency unit set is within a frequency range of an uplink subband of the first time unit, wherein

the first time unit is a time unit used for receiving the first signal, and one frequency unit set comprises one or more frequency units.

20. The method according to claim 19, wherein the first signal is carried on a configured grant first physical uplink shared channel PUSCH, and the first time unit is a time unit determined based on a configured grant periodicity and a configured grant start time unit.

21. The method according to claim 19 or 20, wherein the third frequency unit set is the first frequency unit set, or the third frequency unit set is a frequency unit set determined based on the first frequency unit set and a frequency hopping pattern.

22. The method according to claim 19 or 20, wherein the fourth frequency unit set is the second frequency unit set, or the fourth frequency unit set is a frequency unit set determined based on the second frequency unit set and a frequency hopping pattern.

23. The method according to any one of claims 19 to 22, wherein the first indication information comprises first sub-indication information and second sub-indication information, the first sub-indication information indicates the first frequency unit set, and the second sub-indication information indicates the second frequency unit set; and

the first sub-indication information is carried in radio resource control RRC signaling, and the second sub-indication information is carried in downlink control information DCI; or the first sub-indication information is carried in DCI, and the second sub-indication information is carried in RRC signaling.

24. An uplink transmission method, wherein the method comprises:

sending third indication information to a terminal device, wherein the third indication information indicates a fifth frequency unit set; and

receiving a second signal on a sixth frequency unit set corresponding to a second time unit if the second time unit is a duplex time unit, wherein the sixth frequency unit set is a frequency unit set determined based on the fifth frequency unit set, a frequency range of the sixth frequency unit set is within a range of an uplink subband of the second time unit, and a frequency range of at least a part of frequency units of the fifth frequency unit set is different from the frequency range of the uplink subband corresponding to the second time unit, wherein

the second time unit is a time unit used for receiving the second signal, and one frequency unit set comprises one or more frequency units.

25. The method according to claim 24, wherein the second signal is carried on a configured grant second physical uplink shared channel PUSCH, and the second time unit is a time unit determined based on a configured grant periodicity and a configured grant start time unit.

26. The method according to claim 24 or 25, wherein the sixth frequency unit set is a frequency unit set determined based on the fifth frequency unit set, or the sixth frequency unit set is a frequency unit set determined based on the fifth frequency unit set and a frequency hopping pattern.

27. The method according to any one of claims 24 to 26, wherein a quantity of frequency units between a start frequency and an end frequency of the fifth frequency unit set is a first quantity, a quantity of frequency units between a start frequency and an end frequency of the sixth frequency unit set is a second quantity, and the second quantity is determined based on the first quantity and the first scaling parameter.

28. The method according to claim 27, wherein the second quantity satisfies the following relationship:

$$L_{PUSCH,2} = \left[ L_{PUSCH,1} \times \beta \right],$$

wherein
$L_{PUSCH,2}$ is the second quantity, $L_{PUSCH,1}$ is the first quantity, $\beta$ is the first scaling parameter, $0 < \beta < 1$, and [ ] is a rounding operation.

29. The method according to any one of claims 24 to 26, wherein a quantity of frequency units between a start frequency and an end frequency of the fifth frequency unit set is a first quantity, and a quantity of frequency units between a start frequency and an end frequency of the sixth frequency unit set is a second quantity; and

the second quantity is equal to a quantity of frequency units in the uplink subband corresponding to the second time unit; or
the second quantity is equal to the first quantity.

30. The method according to any one of claims 24 to 26, wherein a quantity of frequency units between a start frequency and an end frequency of the sixth frequency unit set is a second quantity, and the second quantity is determined based on a second scaling parameter and a quantity of frequency units in the uplink subband corresponding to the second time unit.

31. The method according to claim 30, wherein the second quantity satisfies the following relationship:

$$L_{PUSCH,2} = N_{UL\ subband}^{size} / \gamma,$$

wherein

$L_{PUSCH,2}$ is the second quantity, $N_{UL\ subband}^{size}$ is the quantity of frequency units in the uplink subband corresponding to the second time unit, $\gamma$ is the second scaling parameter, and $\gamma > 1$.

32. The method according to any one of claims 24 to 31, wherein a start frequency unit of the sixth frequency unit set is determined based on a result of a modulo operation of an index of a start frequency unit of the fifth frequency unit set on the quantity of frequency units in the uplink subband corresponding to the second time unit.

33. The method according to claim 32, wherein if the frequency unit is a resource block, the start frequency unit of the sixth frequency unit set satisfies the following relationship:

$$RB_{PUSCH}^{start,2} = RB_{PUSCH}^{start,1} \bmod N_{UL\ subband}^{size,RB},$$

or

$$RB_{PUSCH}^{start,2} = RB_{PUSCH}^{start,1} \bmod N_{UL\ subband}^{size,RB} + RB_{UL\ Subband}^{start};$$

or

if the frequency unit is a resource block group, the start frequency unit of the sixth frequency unit set satisfies the following relationship:

$$RBG_{PUSCH}^{start,2} = RBG_{PUSCH}^{start,1} \bmod N_{UL\ subband}^{size,RBG},$$

or

$$RBG_{PUSCH}^{start,2} = RBG_{PUSCH}^{start,1} \bmod N_{UL\ subband}^{size,RBG} + RBG_{UL\ Subband}^{start},$$

wherein

$RB_{PUSCH}^{start,2}$ is an index of a start resource block of the sixth frequency unit set, $RB_{PUSCH}^{start,1}$ is an index of a start resource block of the fifth frequency unit set, $N_{UL\ subband}^{size,RB}$ is a quantity of resource blocks in the uplink subband corresponding to the second time unit, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $RBG_{PUSCH}^{start,1}$ is an index of a start resource block group of the fifth frequency unit set, $N_{UL\ subband}^{size,RBG}$ is a quantity of resource block groups in the uplink subband corresponding to the second time unit, $RBG_{UL\ Subband}^{start}$ is an index of a start resource block group of the uplink subband corresponding to the second time unit, and mod is a modulo operation.

34. The method according to any one of claims 24 to 31, wherein a start frequency unit of the sixth frequency unit set is determined based on a start frequency unit of the fifth frequency unit set and a third scaling parameter.

35. The method according to claim 34, wherein if the frequency unit is a resource block, the start frequency unit of the sixth frequency unit set satisfies the following relationship:

$$RB_{PUSCH}^{start,2} = \left[RB_{PUSCH}^{start,1} \times \alpha\right],$$

or

$$RB_{PUSCH}^{start,2} = \left[RB_{PUSCH}^{start,1} \times \alpha\right] + RB_{UL\ Subband}^{start};$$

or

if the frequency unit is a resource block group, the start frequency unit of the sixth frequency unit set satisfies the following relationship:

$$RBG_{PUSCH}^{start,2} = \left[RBG_{PUSCH}^{start,1} \times \alpha\right],$$

or

$$RBG_{PUSCH}^{start,2} = \left[RBG_{PUSCH}^{start,1} \times \alpha\right] + RBG_{UL\ Subband}^{start},$$

wherein

$RB_{PUSCH}^{start,2}$ is an index of a start resource block of the sixth frequency unit set, $RB_{PUSCH}^{start,1}$ is an index of a start resource block of the fifth frequency unit set, $\alpha$ is the third scaling parameter, $0 < \alpha < 1$, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $RBG_{PUSCH}^{start,1}$ is an index of a start resource block group of the fifth frequency unit set, $RBG_{UL\ Subband}^{start}$ is an index of a start resource block group of the uplink subband corresponding to the second time unit, and [ ] is a rounding operation.

36. The method according to any one of claims 24 to 31, wherein a start frequency unit of the sixth frequency unit set is a start frequency unit of the uplink subband corresponding to the second time unit; or

the start frequency unit of the sixth frequency unit set is a start frequency unit of the fifth frequency unit set; or
if the frequency unit is a resource block, the start frequency unit of the sixth frequency unit set satisfies the following relationship:

$$RB_{PUSCH}^{start,2} = N_{UL\ subband}^{size,RB} - L_{PUSCH,2}^{RB} + RB_{UL\ Subband}^{start};$$

or
if the frequency unit is a resource block group, the start frequency unit of the sixth frequency unit set satisfies the following relationship:

$$RBG_{PUSCH}^{start,2} = N_{UL\ subband}^{size,RB} - L_{PUSCH,2}^{RB} + RBG_{UL\ Subband}^{start};$$

or
if the frequency unit is a resource block, the start frequency unit of the sixth frequency unit set satisfies the following relationship:

$$RB_{PUSCH}^{start,2} = \left[ \left( N_{UL\ subband}^{size,RBG} - L_{PUSCH,2}^{RBG} \right)/2 \right] + RB_{UL\ Subband}^{start};$$

or
if the frequency unit is a resource block group, the start frequency unit of the sixth frequency unit set satisfies the following relationship:

$$RBG_{PUSCH}^{start,2} = \left[ \left( N_{UL\ subband}^{size,RBG} - L_{PUSCH,2}^{RBG} \right)/2 \right] + RBG_{UL\ Subband}^{start},$$

wherein

$RB_{PUSCH}^{start,2}$ is an index of a start resource block of the sixth frequency unit set, $N_{UL\ subband}^{size,RB}$ is a quantity of resource blocks in the uplink subband corresponding to the second time unit, $L_{PUSCH,2}^{RB}$ is a second quantity measured in resource blocks, $RB_{UL\ Subband}^{start}$ is an index of a start resource block of the uplink subband corresponding to the second time unit, $RBG_{PUSCH}^{start,2}$ is an index of a start resource block group of the sixth frequency unit set, $N_{UL\ subband}^{size,RBG}$ is a quantity of resource block groups in the uplink subband corresponding to the second time unit, $L_{PUSCH,2}^{RBG}$ is a second quantity measured in resource block groups, and $RBG_{UL\ Subband}^{start}$ is an index of a start resource block group of the uplink subband corresponding to the second time unit.

37. A communication apparatus, wherein the communication apparatus is configured to perform the uplink transmission method according to any one of claims 1 to 36.

38. A communication apparatus, comprising a processor, wherein the processor is coupled to a memory; and
the processor is configured to execute a computer program stored in the memory, to enable the communication apparatus to perform the uplink transmission method according to any one of claims 1 to 36.

39. A communication apparatus, wherein the communication apparatus comprises a processor and a transceiver, the transceiver is configured to exchange information between the communication apparatus and another communication apparatus, and the processor executes program instructions to perform the uplink transmission method according to any one of claims 1 to 36.

40. A computer-readable storage medium, wherein the computer-readable storage medium comprises a computer program or instructions, and when the computer program or the instructions are run on a computer, the computer is enabled to perform the uplink transmission method according to any one of claims 1 to 36.

FIG. 1

EP 4 593 499 A1

FIG. 2

44

Frequency

A2

E2
G2

G1     PUSCH

E1

F1

A1

PUSCH

Configured grant periodicity

Time

Downlink                    Uplink

FIG. 3

FIG. 4

| Network device | | Terminal device |
| --- | --- | --- |

S501: Send first indication information, where the first indication information includes a first frequency unit set and a second frequency unit set

S502: Send a first signal on a third frequency unit set corresponding to a first time unit if the first time unit is an uplink time unit, where the third frequency unit set is determined based on the first frequency unit set

S503: Send the first signal on a fourth frequency unit set corresponding to the first time unit if the first time unit is a duplex time unit, where the fourth frequency unit set is determined based on the second frequency unit set

FIG. 5

FIG. 6

Network device

Terminal device

S701: Send third indication information, where the third
indication information includes a fifth frequency unit set

S702: Send a second signal on a sixth frequency unit set if a
second time unit used for sending second information is a
duplex time unit, where the sixth frequency unit set is
determined based on the fifth frequency unit set

FIG. 7

FIG. 8

FIG. 9

Network device

Terminal device

S1001: Send fourth indication information, where the fourth indication information indicates a seventh frequency unit set

S1002: If a plurality of third time units used for sending a second signal include an uplink time unit, and a 1$^{st}$ third time unit is a duplex time unit, send a third signal on an eighth frequency unit set corresponding to the third time unit, where the eighth frequency unit set is determined based on the seventh frequency unit set

FIG. 10

FIG. 11

Communication apparatus 1200

1201

Receiving module ←→ Sending module

1202

FIG. 12

Communication apparatus 1300

1301

Processor

CPU 0

CPU 1

1304

Processor

CPU 0

CPU 1

1302

Memory

1303

Transceiver

FIG. 13

## INTERNATIONAL SEARCH REPORT

| International application No. |
| --- |
| **PCT/CN2023/121789** |

**A. CLASSIFICATION OF SUBJECT MATTER**

H04W72/21(2023.01)i; H04W72/0453(2023.01)i; H04W72/1268(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; VEN; CNKI; 3GPP: 子带全双工, 非重叠全双工, 时分双工, 上行时间单元, 双工时间单元, 频率, 频段, 带宽部分, 物理上行共享信道, SBFD, TDD, UL, slot, frequency, BWP, PUSCH

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116266953 A (CHINA TELECOM CORPORATION LIMITED) 20 June 2023 (2023-06-20) description, paragraphs [0051]-[0170] | 1, 6, 19, 24, 37-40 |
| A | LENOVO. "Sub-band non-overlapping full duplex" *3GPP TSG RAN WG1 Meeting #109-e e-Meeting, R1-2204423*, 29 April 2022 (2022-04-29), text, sections 2 and 3 | 1-40 |
| A | HUAWEI et al. "Discussion on subband non-overlapping full duplex" *3GPP TSG-RAN WG1 Meeting #109-e e-Meeting, R1-2203157*, 29 April 2022 (2022-04-29), text, section 2 | 1-40 |
| A | CN 115087102 A (HUAWEI TECHNOLOGIES CO., LTD.) 20 September 2022 (2022-09-20) entire document | 1-40 |
| A | US 2021377926 A1 (QUALCOMM INC.) 02 December 2021 (2021-12-02) entire document | 1-40 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **28 November 2023** | **05 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/121789**

| Patent document cited in search report | | | Publication date (day/month/year) | Patent family member(s) | | | Publication date (day/month/year) |
|---|---|---|---|---|---|---|---|
| CN | 116266953 | A | 20 June 2023 | None | | | |
| CN | 115087102 | A | 20 September 2022 | None | | | |
| US | 2021377926 | A1 | 02 December 2021 | WO | 2021247288 | A1 | 09 December 2021 |
| | | | | US | 11622347 | B2 | 04 April 2023 |
| | | | | US | 2023232378 | A1 | 20 July 2023 |
| | | | | EP | 4158972 | A1 | 05 April 2023 |

Form PCT/ISA/210 (patent family annex) (July 2022)

**EP 4 593 499 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211214283